(19) **Europäisches Patentamt European Patent Office Office européen des brevets**

(11) **EP 4 764 416 A1**

(12) **EUROPEAN PATENT APPLICATION**

(43) Date of publication:
24.06.2026 Bulletin 2026/26

(21) Application number: 24221742.0

(22) Date of filing: **19.12.2024**

(51) International Patent Classification (IPC):
*G01C 21/34* (2006.01)   *B60L 53/67* (2019.01)
*B60L 53/68* (2019.01)   *B60L 58/12* (2019.01)
*B60L 50/60* (2019.01)   *G01C 21/36* (2006.01)

(52) Cooperative Patent Classification (CPC):
**B60L 50/60; B60L 53/67; B60L 53/68; B60L 58/12;
G01C 21/3415; G01C 21/3469; G01C 21/3679;**
B60L 2240/62; B60L 2240/622; B60L 2240/72;
B60L 2260/52

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **HERE Global B.V.**
**5611 ZT Eindhoven (NL)**

(72) Inventors:
• **Beaurepaire, Jerome**
**92400 Nantes (FR)**
• **Kundryk, Marta**
**79018 Lviv (UA)**
• **Derin, Onur**
**5613SG Eindhoven (NL)**
• **Leigh, Joseph**
**10115 Berlin (DE)**

(74) Representative: **Sariot, Eray**
**HERE Global BV**
**Parnassusweg 715**
**1077 DG Amsterdam (NL)**

(54) **VEHICLE ROUTING USING CHARGING ENTITY LOCATION INFORMATION**

(57)     It is inter-alia disclosed a method performed by at least one apparatus, the method comprising obtaining or causing obtaining first location information representative of a first location associated with a first charging entity for charging a vehicle; obtaining or causing obtaining information representative of a remaining range of the vehicle at a first vehicle location, the first vehicle location being associated with the first location; determining or causing determining if at least one second charging entity for charging the vehicle is present, the at least one second charging entity being associated with at least one second location, the at least one second location being reachable by the vehicle from the first vehicle location based on the remaining range of the vehicle at the first vehicle location; and based at least in part on determining or causing determining that the at least one second charging entity is present, routing or causing routing the vehicle based on the first location information.

Fig.3

EP 4 764 416 A1

**Description**

**FIELD OF THE DISCLOSURE**

The present disclosure generally relates to the field of vehicle routing, in particular to routing a vehicle based on location information associated with a charging entity for charging the vehicle.

**BACKGROUND**

Electric vehicles (EVs), in particular battery electric vehicles (BEVs), have recently gained increased attention. The infrastructure for recharging electric vehicles, however, is presently not yet as comprehensive as the infrastructure for refueling gasoline-powered vehicles, e.g. in the form of gas stations. In addition, a number and various characteristics of charging facilities (e.g., charging points) may vary significantly among different charging stations. Such infrastructural limitations may result in range anxiety of drivers or passengers of electric vehicles (e.g., a driver's or a passenger's concern of running out of battery before reaching a certain destination such as a charging station) and/or in an electric vehicle actually running out of battery (e.g., running out of electric energy stored in a battery of the vehicle). In view of this, at least partly mitigating adverse effects that may result from such infrastructural limitations is an important aspect in the further expansion of electric transportation which is generally desirable, e.g. for the purpose of carbon emission reduction.

**SUMMARY OF SOME EMBODIMENTS OF THE INVENTION**

There are various factors that may render a particular charging facility unavailable and/or unusable. For example, a charging facility may be occupied by a different driver and/or vehicle, especially during times of high traffic. Further, a scheduled maintenance and/or technical issues may cause a charging facility to be at least temporarily out of service. Seasonal and/or unexpected power outages (e.g. due to extreme weather conditions) may further affect the possibility of charging an electric vehicle at a charging facility affected by the power outage. In addition, there may arise various compatibility issues such as, e.g., a charging facility not supporting a particular electric vehicle and/or a particular charging standard, or vice versa. Further, inaccuracies in, e.g. real-time, navigational data and/or in navigation systems may lead to unanticipated closures of charging facilities.

While including a relatively large number of, e.g. planned, charging stops (e.g., stops for charging the vehicle) in a route may mitigate some of the aforementioned issues, such an approach may lead to additional delays, e.g. due to repeated and/or lengthy charging breaks, or due to route deviations resulting from additional charging stops.

In view of this, it may be desirable to provide a method for routing an electric vehicle in a fast manner while mitigating at least some of the aforementioned issues.

It is therefore inter-alia an object of the present invention to provide a solution for routing an electric vehicle, in particular a battery electric vehicle, in a fast, yet more reliable manner and in particular to reduce a risk of an electric vehicle running out of battery - thereby reducing range anxiety - while avoiding, as much as possible, additional delays, e.g. due to repeated and/or lengthy charging breaks.

According to a first exemplary aspect of the invention, a method performed by at least one apparatus is disclosed, the method comprising:

- obtaining or causing obtaining first location information representative of a first location associated with a first charging entity for charging a vehicle;
- obtaining or causing obtaining information representative of a remaining range of the vehicle at a first vehicle location, the first vehicle location being associated with the first location;
- determining or causing determining if at least one second charging entity for charging the vehicle is present, the at least one second charging entity being associated with at least one second location, the at least one second location being reachable by the vehicle from the first vehicle location based on the remaining range of the vehicle at the first vehicle location; and
- based at least in part on determining or causing determining that the at least one second charging entity is present, routing or causing routing the vehicle based on the first location information.

In an exemplary embodiment, the at least one apparatus by which the method according to the first aspect is performed is part of or is comprised by the vehicle, which may in particular be an electric vehicle, e.g. a battery electric vehicle (BEV). For example, the at least one apparatus may be part of (e.g., may be integrated into) an infotainment system of the vehicle. Alternatively or in addition, in an exemplary embodiment, the at least one apparatus by which the method is performed corresponds to at least one mobile device such as, e.g., an Internet-of-Things (IoT) device, a smartphone, a tablet computer, a notebook computer, a smart watch, or a smart band. Further alternatively or in addition, in an exemplary embodiment, the at least one apparatus by which the method is performed corresponds to at least one network entity such as at least one server (e.g. a routing server or a routing server cloud). For example, the at least one apparatus by which the method is performed may be integrated in the back end of a routing service providing company. The at least one apparatus may be a single apparatus or may comprise plural apparatuses.

Further, an apparatus is disclosed (and subsequently referred to as apparatus according to the first aspect of the invention) that is configured to perform and/or control the method according to the first aspect or comprises means for performing and/or controlling the steps of the method according to the first aspect. In this case, it is possible either for all of the steps of the method to be controlled, or for all of the steps of the method to be performed, or for one or more steps to be controlled and one or more steps to be performed. One or more of the steps can also be performed and/or controlled by the same unit. By way of example, one or more of the means may be formed by one or more processors.

Further, an apparatus (e.g. the at least one apparatus performing the method according to the first aspect) is disclosed (and subsequently referred to as apparatus according to the first aspect of the invention) that comprises at least one processor and at least one memory that contains program code, wherein the memory and the program code are configured to use the at least one processor to cause an apparatus (for example the apparatus having the processor and the memory) to perform and/or control at least the method according to the first aspect. In this case, it is possible either for all of the steps of the method to be controlled, or for all of the steps of the method to be performed, or for one or more steps to be controlled and one or more steps to be performed.

In an exemplary embodiment, the apparatus according to the first aspect is part of or is comprised by a vehicle, in particular by an electric vehicle, e.g. a battery electric vehicle (BEV). For example, the apparatus according to the first aspect may be part of (e.g., may be integrated into) an infotainment system of a vehicle. Alternatively or in addition, in an exemplary embodiment, the apparatus according to the first aspect corresponds to at least one mobile device, for example to one or more of an Internet-of-Things (IoT) device, a smartphone, a tablet computer, a notebook computer, a smart watch, or a smart band. Further alternatively or in addition, in an exemplary embodiment, the apparatus according to the first aspect corresponds to at least one network entity such as at least one server (e.g. a routing server or a routing server cloud). For example, the at least one apparatus by which the method is performed may be integrated in the back end of a routing service providing company.

Further, a system is disclosed (and subsequently referred to as system according to the first aspect of the invention) that comprises at least one apparatus (e.g. the at least one apparatus according to the first aspect) that is configured to perform and/or control the method according to the first aspect or comprises means for performing and/or controlling the steps of the method according to the first aspect. In this case, it is possible either for all of the steps of the method to be controlled, or for all of the steps of the method to be performed, or for one or more steps to be controlled and one or more steps to be performed.

Further, a computer program is disclosed (and subsequently referred to as computer program according to the first aspect of the invention) that comprises program instructions that cause a processor to perform and/or control the method according to the first aspect when the computer program runs on the processor. In this specification, a processor is intended to be understood to mean control units, microprocessors, microcontrol units such as microcontrollers, digital signal processors (DSP), application-specific integrated circuits (ASICs) or field programmable gate arrays (FPGAs), inter alia. In this case, it is possible either for all of the steps of the method to be controlled, or for all of the steps of the method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. It may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

Accordingly, a computer-readable storage medium having stored thereon the computer program according to the first aspect is further disclosed.

The first aspect may in particular enable routing an electric vehicle, in particular a battery electric vehicle, in a fast, yet more reliable manner, and in particular in a manner such as to reduce a risk of the vehicle running out of battery while avoiding, as much as possible, additional delays, e.g. due to repeated and/or lengthy, in particular, dispensable, charging breaks. More specifically, by routing a vehicle based on location information of a first charging entity (e.g., routing the vehicle to the first charging entity) based on determining that at least one second charging entity is reachable e.g. from the location of said first charging entity location, a risk of an electric vehicle not reaching a charging facility and, as a result, running out of battery may advantageously be reduced. In particular, even if a first charging entity is occupied, unavailable, out of service, incompatible or the like, at least one second charging entity may still be reachable. In addition, in this way, a range anxiety of a user of the vehicle (e.g., a driver or a passenger of the vehicle) may advantageously be reduced.

Exemplary embodiments of all aspects of the present invention may have one or more (or for instance all) of the properties described below.

As mentioned above, the method according to the first aspect comprises

- obtaining or causing obtaining first location information representative of a first location associated with a first charging entity for charging a vehicle.

In an exemplary embodiment, the vehicle is an electric vehicle, e.g. a battery electric vehicle (BEV), and/or carries and/or comprises at least one, e.g. (re-)chargeable, battery, e.g. removably or fixedly, connected to the vehicle.

The first charging entity for charging the vehicle may comprise or may correspond to an apparatus or a system for charging electric vehicles, in particular BEVs. The first charging entity may be configured and/or adapted to charge electric vehicles and/or may comprise means for charging electric vehicles. The first charging entity may thus represent a charging facility. While a charging entity may in general either be stationary or mobile (in the latter case e.g. referred to as a mobile charger), in an exemplary embodiment, the first charging entity is stationary (or fixed). Thus, in an exemplary embodiment, the first charging entity comprises or corresponds to a charging station. A charging station may comprise or may consist of one or more charging points (or charge points). Correspondingly, in an exemplary embodiment, the first charging entity comprises or corresponds to one or more charging points. A charging point for charging an electric vehicle may also be referred to as an Electric Vehicle Charging Point (EVCP).

As mentioned above, the first location is associated with the first charging entity. In an exemplary embodiment, the first location is a location of the (e.g., stationary) first charging entity or a location of a parking space associated with (e.g., adjacent to) the first charging entity. The first location may be representable by horizontal location data, e.g. first horizontal coordinates (e.g. in longitude and latitude directions) and by vertical location data, e.g. first absolute and/or first relative altitude information. Absolute altitude may correspond to an altitude with respect to a reference altitude such as the mean sea level or a reference altitude based on the WGS (World Geodetic System) 84 reference ellipsoid. Relative altitude may correspond to an altitude difference with respect to a reference altitude.

As used herein, the expressions location and position may be used interchangeably.

As mentioned above, the first location information is representative of the first location. For example, the first location information may comprise or may consist of one or more values representative of the first location, e.g. one or more first (e.g., horizontal) coordinate values and one or more first absolute and/or relative altitude values. In an exemplary embodiment, the first location information thus allows for localizing the first charging entity and/or a parking space associated with the first charging entity.

In an exemplary embodiment, obtaining the first location information comprises or corresponds to receiving the first location information, e.g. from at least one further apparatus (e.g., an external apparatus). The at least one further apparatus may correspond to at least one network entity such as at least one server (e.g. a routing server or a routing server cloud). For example, the at least one further apparatus may be integrated in the back end of a routing service providing company. Alternatively or in addition, in an exemplary embodiment, obtaining the first location information comprises or corresponds to retrieving the first location information, e.g. from at least one (e.g., internal) memory of the at least one apparatus. Thus, at least a part of the first location information may be received from an external apparatus and/or at least a part of the first location information may be retrieved by the at least one apparatus performing the method.

As mentioned above, the method according to the first aspect further comprises

- obtaining or causing obtaining information representative of a remaining range of the vehicle at a first vehicle location, the first vehicle location being associated with the first location.

In an exemplary embodiment, the first vehicle location is a (first) location of the vehicle, e.g. at a first point in time. The first vehicle location may be representable by horizontal and vertical location data, as further described herein, e.g. as part of first vehicle location information which may thus allow for localizing the vehicle.

The first vehicle location being associated with the first location may mean, in an exemplary embodiment, that the first vehicle location corresponds to the first location (e.g., the vehicle may be at the first location) or that the first vehicle location is a location associated with, but different from the first location. For example, in an exemplary embodiment, the first vehicle location is a location in between an earlier vehicle location and the first location. For instance, if the vehicle is in an example first routed towards the first location but then has to be rerouted (e.g. due to a road closure), the first vehicle location may comprise or correspond to an intermediate location of the vehicle in between an earlier vehicle location and the first location (e.g., a location of the vehicle at a point in time at which the vehicle is rerouted).

In an exemplary embodiment, the remaining range of the vehicle at the first vehicle location corresponds to a range (or reach) of the vehicle remaining at the first vehicle location (e.g., as opposed to a range of the vehicle when a battery of the vehicle is fully charged). In an exemplary embodiment, the remaining range is or has been determined (e.g. estimated), e.g. based on one or more measurement(s), simulation(s) and/or mathematical formula(s). The remaining range may for example be provided in units of kilometers (km) and/or miles (mi), or any other suitable unit of length.

In an exemplary embodiment, the information representative of the remaining range comprises or consists of one or more values representative of the remaining range, e.g. provided as a distance, e.g. in units of length. Alternatively or in addition, in an exemplary embodiment, the information representative of the remaining range comprises or consists of one or more values representative of a remaining percentage of battery charge of a battery of the vehicle (e.g., provided in %), or comprises or consists of one or more values representative of a remaining amount of energy stored in a battery of the vehicle (e.g., provided in Kilowatt-hours (kWh) or any other suitable unit of energy). Further alternatively or in addition, in an exemplary embodiment, the information representative of the remaining range comprises or consists of one or more values representative of a remaining driving time, e.g. assuming a certain power consumption.

In an exemplary embodiment, the information representative of the remaining range defines or is visualizable as an isoline (which may, e.g., be referred to as a remaining range isoline). Generally, an isoline may comprise or may correspond to a line representative of a constant value on a multi-dimensional domain (e.g., on a map). Correspondingly, in an exemplary embodiment, a remaining range isoline comprises or corresponds to a line representative of a remaining range, e.g. on a map. In an exemplary embodiment, a remaining range isoline indicates, for a given location of a vehicle, an area on a map which is reachable by the vehicle from said given location based on a remaining range of the vehicle at said given location. In other words, a remaining range isoline may for instance define one or more reachable locations that are reachable by the vehicle from said given location based on the remaining range of the vehicle at said given location. In an exemplary embodiment, a remaining range isoline corresponds to a closed curve (e.g. on a map).

In an exemplary embodiment, obtaining the information representative of the remaining range comprises or corresponds to determining, by the at least one apparatus, the remaining range, e.g. based on one or more measurement(s), simulation(s) and/or mathematical formula(s), and (e.g. internally) providing information representative of the determined remaining range. Alternatively or in addition, in an exemplary embodiment, obtaining the information representative of the remaining range comprises or corresponds to retrieving the information representative of the remaining range, e.g. from at least one (e.g. internal) control unit of the vehicle, e.g. a battery management system of the vehicle.

As mentioned above, the method according to the first aspect further comprises

- determining or causing determining if at least one second charging entity for charging the vehicle is present, the at least one second charging entity being associated with at least one second location, the at least one second location being reachable by the vehicle from the first vehicle location based on the remaining range of the vehicle at the first vehicle location.

Thus, in short, it may in particular be determined whether or not at least one second charging entity reachable from the first vehicle location is present. In other words, in an exemplary embodiment, a presence or absence of at least one second charging entity reachable from the first vehicle location is determined. Said determination may in particular be performed based on the obtained information representative of the remaining range of the vehicle at the first vehicle location and based on information representative of the first vehicle location. In an exemplary embodiment, the method therefore further comprises obtaining or causing obtaining (e.g., (causing) receiving and/or (causing) determining) information representative of the first vehicle location, e.g. based on one or more location determination methods or systems (e.g. using a global navigation satellite system (GNSS) or the like).

The at least one second charging entity may comprise one or more second charging entities. Like the first charging entity, a respective one (e.g. each) of the at least one second charging entity may comprise or may correspond to an apparatus or a system for charging electric vehicles, in particular BEVs. A respective one (e.g. each) of the at least one second charging entity may be configured and/or adapted to charge electric vehicles and/or may comprise means for charging electric vehicles. A respective one (e.g. each) of the at least one second charging entity may thus represent a charging facility. In an exemplary embodiment, the at least one second charging entity is stationary (or fixed). Thus, in an exemplary embodiment, a respective one (e.g. each) of the at least one second charging entity comprises or corresponds to a charging station. In an exemplary embodiment, a respective one (e.g. each) of the at least one second charging entity comprises or corresponds to one or more charging points.

As mentioned above, the at least one second charging entity is associated with the at least one second location. Thus, the other way around, the at least one second location may be considered as being associated with the at least one second charging entity. In an exemplary embodiment, a respective one (e.g. each) of the at least one second location is a respective location of a respective one of the at least one second charging entity. Alternatively, in an exemplary embodiment, a respective one (e.g. each) of the at least one second location is a respective location of a respective parking space associated with (e.g., adjacent to) a respective one of the at least one second charging entity. A respective one (e.g. each) of the at least one second location may be representable by respective horizontal location data, e.g. respective second horizontal coordinates (e.g. in longitude and latitude directions) and by respective vertical location data, e.g. respective second absolute and/or respective second relative altitude information.

The at least one second location being reachable by the vehicle from the first vehicle location based on the remaining range of the vehicle at the first vehicle location may mean, in an exemplary embodiment, that the remaining range of the vehicle at the first vehicle location is sufficient in order for the vehicle to reach the at least one second location when starting from the first vehicle location. In other words, in an exemplary embodiment, the at least one second location (and, thus, the at least one second charging entity) lies within a remaining range isoline (as further described herein) corresponding to the remaining range of the vehicle at the first vehicle location and/or within an area defined by said remaining range isoline (e.g. on a map). The at least one second location may comprise one or more second locations, wherein, in an exemplary embodiment, a respective one, in particular each, of the at least one second location is reachable by the vehicle from the first vehicle location.

As mentioned above, the method according to the first aspect further comprises

- based at least in part on determining or causing determining that the at least one second charging entity is present, routing or causing routing the vehicle based on the first location information.

In an exemplary embodiment, routing the vehicle based on the first location information comprises routing the vehicle, at least temporarily, to and/or along the first location. In other words, in an exemplary embodiment, routing the vehicle based on the first location information comprises using the first location information for routing the vehicle. As used herein, in an exemplary embodiment, routing a vehicle comprises either or both of planning a route for the vehicle (and/or for a driver of the vehicle) and/or routing (e.g., navigating) the vehicle (and/or the driver of the vehicle).

As mentioned above, the vehicle may be routed based on the first location information based at least in part on (e.g., after and/or in response to) determining that the at least one second charging entity is present. In other words, in an exemplary embodiment, the vehicle is routed based on the first location information (e.g. only) if it is determined that the at least one second charging entity is present. Yet put differently, in an exemplary embodiment, a decision whether or not the vehicle is routed based on the first location information is made based on a determination whether or not at least one (reachable) second charging entity is present.

As mentioned above, in this way, a risk of the vehicle not reaching a charging facility and, as a result, running out of battery when routing the vehicle may advantageously be reduced while avoiding, as much as possible, additional delays, e.g. due to repeated and/or lengthy, in particular dispensable, charging breaks. In addition, in this way, a range anxiety of a user of the vehicle (e.g., a driver or a passenger of the vehicle) may advantageously be reduced.

As a result of said determination whether or not at least one (reachable) second charging entity is present, it may be determined that there is at least one (reachable) second charging entity.

Correspondingly, in an exemplary embodiment, the method according to the first aspect comprises:

- determining or causing determining that at least one second charging entity for charging the vehicle is present, the at least one second charging entity being associated with at least one second location, the at least one second location being reachable by the vehicle from the first vehicle location based on the remaining range of the vehicle at the first vehicle location; and
- based at least in part on determining or causing determining that the at least one second charging entity is present, routing or causing routing the vehicle based on the first location information.

If it is on the other hand determined, in an exemplary embodiment, that there is not at least one (reachable) second charging entity, in said exemplary embodiment, the vehicle is not routed to and/or along the first location. Thus, in an exemplary embodiment, the method further comprises determining or causing determining that not at least one (reachable) second charging entity for charging the vehicle is present. Based on this determination, in said exemplary embodiment, it is then decided to route the vehicle not to and/or along the first location, but, e.g., to at least one further location associated with at least one further charging entity, e.g. at least one further charging entity from which at least one second charging entity for charging the vehicle is reachable.

Correspondingly, in an exemplary embodiment, the method further comprises:

- based at least in part on (e.g., after and/or in response to) determining or causing determining that the at least one second charging entity is not present, routing or causing routing the vehicle based on further location information representative of at least one further location associated with at least one further charging entity different from the first charging entity.

In other words, in an exemplary embodiment, if it is determined that there is not at least one second charging entity reachable from the first location, the vehicle is routed to and/or along the at least one further location, in particular instead of being routed to and/or along the first location. In an exemplary embodiment, the at least one further charging entity thus does not comprise the first charging entity. Correspondingly, in an exemplary embodiment, the at least one further location is different from the first location.

In particular in this way, it may advantageously be avoided to route a vehicle to and/or along a charging entity from which not at least one further (e.g. a fallback) charging entity is reachable with the remaining range of the vehicle, thereby reducing a risk of the vehicle running out of battery. In addition, in particular in this way, a range anxiety of a user of the vehicle may advantageously be reduced.

Thereby, in an exemplary embodiment, a respective one (e.g. each) of the at least one further charging entity is a charging entity from which the at least one second charging entity is reachable.

Correspondingly, in an exemplary embodiment, the method further comprises, e.g. prior to routing or causing routing the vehicle based on the further location information:

- determining or causing determining that the at least one second location is reachable by the vehicle from at least one further vehicle location based on the remaining range of the vehicle at the at least one further vehicle location, the at least one further vehicle location being associated with the at least one further location.

It is noted that the above remarks with respect to the first and the at least one second charging entity, namely that said charging entities may comprise or may correspond to an apparatus or a system for charging electric vehicles etc., apply correspondingly to the at least one further charging entity.

In addition to the criterion of the at least one second charging entity being present, in an exemplary embodiment, the decision whether or not the vehicle is routed based on the first location information is based on further (e.g. predetermined and/or used-defined) criteria such as, e.g., a number of charging points comprised by the first charging entity, one or more characteristics of the first charging entity (e.g., charging power, charging standard, etc.), the presence of further amenities associated with the first charging entity, or the like. That being said, in an exemplary embodiment, the decision whether or not the vehicle is routed based on the first location information is based only on the criterion of the at least one second charging entity being present.

In an exemplary embodiment, the method further comprises:

- obtaining or causing obtaining second location information representative of the at least one second location; and
- holding available or causing holding available, at least temporarily, the second location information for routing or causing routing the vehicle.

In other words, in an exemplary embodiment, the second location information, which is representative of the second location(s) of the second charging entity(ies), is used for (causing) routing the vehicle and, to this end, is held available at least temporarily. The second location information may for example comprise or may consist of one or more values representative of the at least one second location, e.g. one or more respective second (e.g., horizontal) coordinate values and one or more respective second absolute and/or relative altitude values. In an exemplary embodiment, the second location information thus allows for localizing a respective one (e.g. each) of the at least one second charging entity and/or a respective parking space associated with a respective one (e.g. each) of the at least one second charging entity.

In an exemplary embodiment, obtaining the second location information comprises or corresponds to receiving the second location information (e.g. from the at least one further apparatus) and/or to retrieving the second location information (e.g. from at least one memory of the at least one apparatus).

In an exemplary embodiment, holding available the second location information at least temporarily (e.g., temporarily or permanently) comprises or corresponds to at least temporarily storing the second location information in at least one, e.g. internal, memory of the at least one apparatus, in at least one, e.g. internal, memory of the at least one further apparatus and/or in at least one further, e.g. external, computer-readable storage medium.

As mentioned, the second location information may be (caused to be) held available for (causing) routing the vehicle. In an exemplary embodiment, the vehicle is (caused to be) routed based on the second location information. Accordingly, in an exemplary embodiment, the method further comprises:

- routing or causing routing the vehicle based on the second location information.

In an exemplary embodiment, routing the vehicle based on the second location information comprises routing the vehicle, at least temporarily, to and/or along the second location(s). In other words, in an exemplary embodiment, routing the vehicle based on the second location information comprises using the second location information for routing the vehicle.

In an exemplary embodiment, the vehicle is thus routed, e.g., to and/or along the second charging entity(ies), e.g. if the first charging entity is occupied, unavailable, out of service, incompatible or the like, thereby advantageously avoiding that the vehicle runs out of battery (as it may, e.g., be charged at the second charging entity(ies)). As a result, a range anxiety of a user of the vehicle may be reduced.

In an exemplary embodiment, the method further comprises:

- obtaining or causing obtaining trigger information, the trigger information causing at least one of:

  ○ stopping or causing stopping routing the vehicle based on the first location information;
  ○ adapting or causing adapting routing the vehicle based on the first location information; or
  ○ routing or causing routing the vehicle based on second location information representative of the at least one second location.

In other words, in an exemplary embodiment, trigger information is (caused to be) obtained, said trigger information triggering one or more of the aforementioned actions. In an exemplary embodiment, the trigger information thus causes the at least one apparatus by which the method is performed to perform one or more of said actions, e.g. based on, in response to and/or after obtaining the trigger information. The trigger information may cause one, several or all of said actions to be performed. In an exemplary embodiment, the trigger information comprises at least one trigger signal, e.g. for triggering performing one or more of said actions, and/or corresponds to trigger data, e.g. based on which one or more of said actions may be performed.

In an exemplary embodiment, obtaining the trigger information comprises or corresponds to receiving the trigger information (e.g. from the at least one further apparatus mentioned above and/or from at least one further apparatus comprised by the vehicle, e.g. a control apparatus or an apparatus receiving user input) and/or to determining (e.g. by the at least one apparatus performing the method) the trigger information.

In an exemplary embodiment, the trigger information is (caused to be) obtained based on at least one of:

○ determining or causing determining that the vehicle cannot be charged using the first charging entity (e.g., due to the first charging entity being occupied, unavailable, out of service, incompatible or the like);
○ determining or causing determining that a distance between the vehicle and the first location exceeds a predetermined threshold (e.g., due to the vehicle moving away from the first charging entity, for instance due to a user of the vehicle deciding to skip the first charging entity); or
○ a user of the vehicle providing the trigger information (e.g., by pressing a button or providing a voice command).

As mentioned, in an exemplary embodiment, routing the vehicle based on the first location information is stopped or caused to be stopped based on, in response to and/or after obtaining the trigger information. For example, in an exemplary embodiment, a routing of the vehicle, e.g. in an infotainment system of the vehicle, to and/or along the first location is cancelled based on, in response to and/or after obtaining the trigger information. Alternatively or in addition, in an exemplary embodiment, routing the vehicle based on the first location information is adapted or caused to be adapted based on, in response to and/or after obtaining the trigger information. For example, in an exemplary embodiment, a route, e.g. a route presently configured in an infotainment system of the vehicle, is adjusted based on, in response to and/or after obtaining the trigger information. Alternatively or in addition, in an exemplary embodiment, based on, in response to and/or after obtaining the trigger information, the vehicle is routed or caused to be routed based on second location information representative of the at least one second location, e.g. to and/or along at least one of the at least one second location. For example, in an exemplary embodiment, the vehicle is guided, e.g. by an infotainment system of the vehicle, to and/or along at least one of the at least one second location based on, in response to and/or after obtaining the trigger information.

In this way, by taking into account, e.g., the first charging entity being occupied, unavailable, out of service, incompatible or the like (which may be determined by the at least one apparatus and/or by the user), and/or the user of the vehicle (e.g., deliberately) deciding to skip the first charging entity, the vehicle may be routed in an advantageous, e.g. user-friendly and/or technically advantageous, manner.

In an exemplary embodiment, the method further comprises:

- obtaining or causing obtaining information representative of a remaining range of the vehicle at a second vehicle location, the second vehicle location being associated with at least one of the at least one second location;
- determining or causing determining if at least one third charging entity for charging the vehicle is present, the at least one third charging entity being associated with at least one third location, the at least one third location being reachable by the vehicle from the second vehicle location based on the remaining range of the vehicle at the second vehicle location; and
- based at least in part on determining or causing determining that the at least one third charging entity is present, routing or causing routing the vehicle based on the first location information and/or based on second location information representative of the at least one second location.

In other words, in an exemplary embodiment, the steps of the method according to the first aspect are essentially repeated, with the first location being replaced by at least one of the at least one second location, with the first vehicle location being replaced by the second vehicle location, and with the at least one second charging entity being replaced by the at least one third charging entity, wherein in said exemplary embodiment, based at least in part on (causing) determining that at least one (reachable) third charging entity is present, the vehicle is routed based on the first location information and/or based on second location information representative of the at least one second location. Yet put differently, while the method according to the first aspect may for instance be understood as a method for determining if one or more first-level fallback charging entities are present (and routing the vehicle accordingly), the exemplary embodiment mentioned above may for instance be understood to determine if one or more second-level fallback charging entities are present (e.g., fallback charging entities of a fallback charging entity).

In this way, a risk of the vehicle not reaching a charging facility and, as a result, running out of battery when routing the vehicle may be reduced even further while avoiding, as much as possible, additional delays, e.g. due to repeated and/or lengthy, in particular dispensable, charging breaks. In addition, in this way, a range anxiety of a user of the vehicle may be reduced even further.

It is noted that the above remarks with respect to the first and the at least one second charging entity, namely that said charging entities may comprise or may correspond to an apparatus or a system for charging electric vehicles etc., apply correspondingly to the at least one third charging entity.

More generally, in an exemplary embodiment, the method may comprise:

- obtaining or causing obtaining $n^{th}$ location information representative of an $n^{th}$ location associated with an $n^{th}$ charging entity for charging the vehicle, with n being a natural number;
- obtaining or causing obtaining information representative of a remaining range of the vehicle at an $n^{th}$ vehicle location, the $n^{th}$ vehicle location being associated with the $n^{th}$ location;
- determining or causing determining if at least one $(n + 1)^{th}$ charging entity for charging the vehicle is present, the at least one $(n + 1)^{th}$ charging entity being associated with at least one $(n + 1)^{th}$ location, the at least one $(n + 1)^{th}$ location being reachable by the vehicle from the $n^{th}$ vehicle location based on the remaining range of the vehicle at the $n^{th}$ vehicle location; and
- based at least in part on determining or causing determining that the at least one $(n + 1)^{th}$ charging entity is present, routing or causing routing the vehicle based on the $n^{th}$ location information.

In other words, in an exemplary embodiment, the steps of the method according to the first aspect are generalized from n = 1 (as it may be considered to be the case for the method according to the first aspect) to n being an arbitrary (e.g. predetermined or predefined) natural number (e.g., greater than two, i.e. 2, 3, 4, and so forth). Yet put differently, while the method according to the first aspect may for instance be understood as a method for determining if one or more first-level fallback charging entities are present (and routing the vehicle accordingly), the exemplary embodiment mentioned above may for instance be understood to determine if one or more $n^{th}$-level fallback charging entities (e.g., located at the at least one $(n + 1)^{th}$ location) are present.

It is noted that the above remarks with respect to the first and the at least one second charging entity, namely that said charging entities may comprise or may correspond to an apparatus or a system for charging electric vehicles etc., apply correspondingly to the $n^{th}$ charging entity and to the at least one $(n + 1)^{th}$ charging entity.

It has been found that by choosing n in a suitable manner, a risk of the vehicle not reaching a charging facility and, as a result, running out of battery when routing the vehicle may be reduced even further while avoiding, as much as possible, additional delays, e.g. due to repeated and/or lengthy, in particular dispensable, charging breaks. In addition, in this way, a range anxiety of a user of the vehicle may be reduced even further (e.g., by informing the user that there are, e.g. at least, n levels of fallback charging entities).

In an exemplary embodiment, the method further comprises:

- determining or causing determining, based on a location of the vehicle and a remaining range of the vehicle at the location, a maximum number $n_{max}$ associated with the location, wherein the at least one $(n + 1)^{th}$ location is reachable by the vehicle from the $n^{th}$ vehicle location based on the remaining range of the vehicle at the $n^{th}$ vehicle location only for $n \leq n_{max}$.

In other words, in an exemplary embodiment, the method comprises determining, for a (e.g. given) location of the vehicle, a number of maximum possible fallbacks. In an exemplary embodiment, the location of the vehicle is a present location of the vehicle, e.g. at a point in time when at least some of the steps of the method according to the first aspect are performed, and/or is part of a planned route. The (e.g. present) location of the vehicle may for instance be determined based on one or more location determination methods or systems (e.g. using a global navigation satellite system (GNSS) or the like). In an exemplary embodiment, the method thus further comprises determining or causing determining the location of the vehicle.

In an exemplary embodiment, the remaining range of the vehicle at the $n^{th}$ vehicle location is determined based on the remaining range of the vehicle at said (e.g. given) location of the vehicle and a distance between the $n^{th}$ vehicle location and the location of the vehicle (e.g., reflecting a reduction of the remaining range as a result of traveling said distance). Correspondingly, in an exemplary embodiment, the at least one $(n + 1)^{th}$ location is reachable by the vehicle from said (e.g. given) location of the vehicle based on the remaining range of the vehicle at said location of the vehicle.

In an exemplary embodiment, the maximum number $n_{max}$ is provided (e.g. displayed) to a user of the vehicle. Alternatively or in addition, in an exemplary embodiment, the maximum number $n_{max}$ is used for routing or causing routing the vehicle. For example, in an exemplary embodiment, the vehicle is (caused to be) routed in a manner such as to ensure that, at each location along a planned route, a respective maximum number $n_{max}$ associated with a respective location along the planned route is greater than or equal to a threshold value, which may in particular be predetermined and/or user-defined.

In this way, a risk of the vehicle not reaching a charging facility and, as a result, running out of battery when routing the vehicle as well as a range anxiety of a user of the vehicle may advantageously be further reduced.

Correspondingly, in an exemplary embodiment, the method further comprises:

- obtaining or causing obtaining information representative of a predetermined minimum number $n_{min}$, wherein the at least one $(n + 1)^{th}$ location is to be reachable by the vehicle from the $n^{th}$ vehicle location based on the remaining range of the vehicle at the $n^{th}$ vehicle location for $n \le n_{min}$; and
- routing or causing routing the vehicle based on $n_{min}$.

In an exemplary embodiment, the predetermined minimum number $n_{min}$ corresponds to said threshold value and/or is predetermined and/or user-defined. In other words, in an exemplary embodiment, the predetermined minimum number $n_{min}$ corresponds to a desired minimum number of possible fallbacks.

In an exemplary embodiment, routing or causing routing the vehicle based on $n_{min}$ comprises (causing) routing the vehicle in a manner such as to ensure that the vehicle is (caused to be) routed (e.g. only) to and/or along locations from which the at least one $(n + 1)^{th}$ location is reachable based on respective remaining ranges of the vehicle at said locations, at least for $n \le n_{min}$. To this end, in an exemplary embodiment, the remaining range of the vehicle at the $n^{th}$ vehicle location is determined based on the remaining range of the vehicle at a respective location to and/or along which the vehicle is to be (caused to be) routed and further based on a distance between the $n^{th}$ vehicle location and said respective location (e.g., reflecting a reduction of the remaining range as a result of traveling said distance).

In this way, a risk of the vehicle not reaching a charging facility and, as a result, running out of battery when routing the vehicle may be controlled (e.g., reduced) in a desired manner, e.g. by a routing system and/or by a user of the vehicle. In addition, in this way, a range anxiety of a user of the vehicle may be reduced even further (e.g., by letting the user control a number of desired fallback levels).

In an exemplary embodiment, the method further comprises:

- obtaining or causing obtaining subsequent location information representative of a subsequent location associated with a subsequent charging entity for charging the vehicle, wherein the vehicle is to be charged using the subsequent charging entity subsequent to being charged using the first charging entity;
- routing or causing routing the vehicle based on the first location information and based on the subsequent location information.

In an exemplary embodiment, the subsequent charging entity corresponds to a charging entity along a planned route, the planned route being such that the vehicle is planned to be charged using the first charging entity and, subsequently (e.g. after being charged using the first charging entity), to be charged using the subsequent charging entity. Thus, that the vehicle is to be charged using the subsequent charging entity subsequent to being charged using the first charging entity may mean, in an exemplary embodiment, that the vehicle is being or has been planned to be charged using the subsequent charging entity subsequent to being charged using the first charging entity, e.g. when planning a route for the vehicle.

In an exemplary embodiment, the subsequent location associated with the subsequent charging entity is a location of the subsequent charging entity or a location of a parking space associated with (e.g., adjacent to) the subsequent charging entity. The subsequent location may be representable by horizontal location data, e.g. subsequent horizontal coordinates and by vertical location data, e.g. subsequent absolute and/or subsequent relative altitude information.

Correspondingly, in an exemplary embodiment, the subsequent location information comprises or consists of one or more values representative of the subsequent location, e.g. one or more subsequent (e.g., horizontal) coordinate values and one or more subsequent absolute and/or relative altitude values. In an exemplary embodiment, the subsequent location information thus allows for localizing the subsequent charging entity and/or a parking space associated with the subsequent charging entity.

It is noted that the above remarks with respect to the first and the at least one second charging entity, namely that said charging entities may comprise or may correspond to an apparatus or a system for charging electric vehicles etc., apply correspondingly to the subsequent charging entity.

In an exemplary embodiment, obtaining the subsequent location information comprises or corresponds to receiving the subsequent location information (e.g. from the at least one further apparatus mentioned above) and/or to determining (e.g. by the at least one apparatus performing the method) the subsequent location information.

In an exemplary embodiment, routing the vehicle based on the first location information and based on the subsequent location information comprises routing the vehicle to and/or along the first location and to and/or along the subsequent location. In other words, in an exemplary embodiment, routing the vehicle based on the first location information and based on the subsequent location information comprises using both the first location information and the subsequent location information for routing the vehicle. In particular, in an exemplary embodiment, the vehicle is first routed to and/or along the first location and is subsequently routed to and/or along the subsequent location.

In an exemplary embodiment, routing or causing routing the vehicle based on the first location information and based on the subsequent location information comprises:

- determining or causing determining information representative of at least one route deviation, wherein each of the at least one route deviation indicates a deviation of

  1) a respective route from the first location to the subsequent location via a respective subset of the at least one second location to
  2) a direct route from the first location to the subsequent location; and

- routing or causing routing the vehicle based on the at least one route deviation.

In an exemplary embodiment, a direct route from the first location to the subsequent location corresponds to a shortest and/or fastest route from the first location to the subsequent location (e.g. a route having a shortest length and/or a shortest expected travel time), e.g. a route without any detours or deviations.

In an exemplary embodiment, a respective route from the first location to the subsequent location via a respective subset of the at least one second location corresponds to a route via (or along) the second location(s) included in the respective subset. In other words, in an exemplary embodiment, a route via the respective subset includes the second location(s) included by the respective subset.

As mentioned, each of the at least one route deviation indicates a deviation of 1) a respective route from the first location to the subsequent location via a respective subset to 2) a direct route from the first location to the subsequent location. In an exemplary embodiment, the information representative of the at least one route deviation comprise one or more values representative of a respective route deviation, e.g. a respective additional travel distance and/or a respective additional (e.g., expected) travel time due to including respective second location(s) included by a respective subset into the route, e.g. due to traveling from the first location to the subsequent location via the respective second location(s). In an exemplary embodiment, the information representative of the at least one route deviation thus allows for quantifying the at least one route deviation.

In an exemplary embodiment, routing or causing routing the vehicle, in particular from the first location to the subsequent location, based on the at least one route deviation comprises using the respective route deviation(s) of the respective subsets for routing the vehicle. For example, in an exemplary embodiment, the vehicle is (caused to be) routed, in particular from the first location to the subsequent location, such that the at least one route deviation does not exceed a (e.g., predetermined and/or user-defined) threshold. Alternatively or in addition, in an exemplary embodiment, the vehicle is (caused to be) routed, in particular from the first location to the subsequent location, such that the at least one route deviation is minimized, e.g. while fulfilling one or more further, e.g. predetermined, criteria.

Thus, respective route deviations, e.g. respective additional travel distances and/or times due to routing the vehicle, e.g., via (or along) the second location(s) included in the respective subset may be quantified and may be advantageously used for routing the vehicle. In this way, additional delays due to route deviations resulting from additional charging stops may be reduced even more efficiently.

In an exemplary embodiment, routing or causing routing the vehicle based on the at least one route deviation comprises:

- determining or causing determining a minimum route deviation subset of the at least one second charging entity, wherein a number of second charging entities comprised by the minimum route deviation subset is greater than or equal to a predetermined minimum number of charging entities, and wherein a route deviation associated with the minimum route deviation subset is a smallest route deviation among respective route deviations associated with respective subsets comprising respective numbers of second charging entities greater than or equal to the predetermined minimum number of charging entities; and

- routing or causing routing the vehicle based on the minimum route deviation subset.

In other words, in an exemplary embodiment, said minimum route deviation subset has a smallest route deviation among all subsets comprising at least said predetermined minimum number of charging entities. Thereby, in an exemplary embodiment, a subset of the at least one second charging entity comprises one or more (e.g., some or all) of the at least one second charging entity. For example, in an exemplary embodiment, a subset of the at least one second charging entity corresponds to an, e.g. ordered, list of one or more (e.g., some or all) of the at least one second charging entity.

In an exemplary embodiment, determining or causing determining the minimum route deviation subset comprises performing an exhaustive search, e.g. by looping over all subsets comprising at least said predetermined minimum number of charging entities and determining the minimum route deviation subset as the subset having the smallest route deviation among the traversed subsets.

In an exemplary embodiment, routing or causing routing the vehicle, in particular from the first location to the subsequent location, based on the minimum route deviation subset comprises or corresponds to (causing) routing the vehicle via the second location(s) included in the minimum route deviation subset.

In this way, additional delays due to route deviations resulting from (e.g. desired) additional charging stops may be advantageously minimized.

In an exemplary embodiment, routing or causing routing the vehicle based on the at least one route deviation comprises:

- obtaining or causing obtaining, for each of at least one subset of the at least one second location, information representative of a respective route index based on the at least one route deviation and based on a respective number of second charging entities associated with the respective subset; and
- routing or causing routing the vehicle based on a subset among the at least one subset having a maximum or minimum route index.

In an exemplary embodiment, said respective route index reflects a relation between a respective route deviation of a respective subset and a respective number of second charging entities of that subset. In other words, in an exemplary embodiment, said respective route index quantifies a tradeoff between a number of second charging entities of a respective subset (generally, more second charging entities are desirable) and a route deviation resulting from routing the vehicle via respective second location(s) of the subset (generally, a smaller route deviation is desirable). Based on such quantification, an increased level of assurance due to additional charging stops (e.g., reducing a risk of running out of battery) may be weighted in a desired manner against additional delays due to route deviations resulting from the additional charging stops.

In an exemplary embodiment, obtaining or causing obtaining the information representative of the respective route index comprises or corresponds to receiving said information, e.g. from the at least one further apparatus (e.g., an external apparatus). Alternatively or in addition, in an exemplary embodiment, (causing) obtaining said information comprises or corresponds to determining the respective route index (e.g. by the at least one further apparatus or by the at least one apparatus performing the method) based on the at least one route deviation and based on the respective number of second charging entities.

In an exemplary embodiment, the respective route index is determined using one or more mathematical equations and/or functions. Further, in an exemplary embodiment, the respective route index is determined based on one or more values representative of the respective route deviation (e.g. a respective additional travel distance and/or a respective additional, e.g. expected, travel time) and further based on the respective number of second charging entities. In an exemplary embodiment, the mathematical equation(s)/function(s) used for determining the respective route index depend from the value(s) representative of the respective route deviation and from the respective number of second charging entities.

If, in an exemplary embodiment, the mathematical equation(s)/function(s) are such that a value of the respective route index increases with an increasing route deviation value and/or increases with a decreasing number of second charging entities, in said exemplary embodiment, the vehicle is routed based on a subset having a minimum route index. If, on the other hand, the mathematical equation(s)/function(s) are in an exemplary embodiment such that a value of the respective route index increases with a decreasing route deviation value and/or increases with an increasing number of second charging entities, in said exemplary embodiment, the vehicle is routed based on a subset having a maximum route index.

In an exemplary embodiment, a respective route index $RI$ is determined based on a respective route deviation $RD$ and a respective number $k$ of second charging entities according to the following equation:

$$RI = s_1\left(s_2\left(\frac{1}{RD}\right) \times s_3(k)\right)$$

with scaling functions $s_1$, $s_2$, $s_3$. In an exemplary embodiment, scaling functions $s_1$, $s_2$, $s_3$ are min/max scaling functions for scaling the respective function argument to a range from a predefined minimum value to a predefined maximum value. Alternatively or in addition, in an exemplary embodiment, scaling functions $s_1$, $s_2$, $s_3$ correspond to scaling factors for scaling an impact of a respective route deviation $RD$ and a respective number $k$ of second charging entities on the calculated respective route index $RI$.

In an exemplary embodiment, the information representative of the respective route index comprise or correspond to one or more values representing the respective route index, e.g. in the form of one or more (e.g., unitless) decimal numbers.

In an exemplary embodiment, routing or causing routing the vehicle, in particular from the first location to the subsequent location, based on the subset among the at least one subset having a maximum or minimum route index comprises or corresponds to (causing) routing the vehicle via the second location(s) included in the subset having the maximum or minimum route index.

In this way, an increased level of assurance due to the additional charging stops (e.g., reducing a risk of running out of battery) may advantageously be weighted in a desired manner against additional delays due to route deviations resulting from the additional charging stops when routing the vehicle from the first location to the subsequent location.

In an exemplary embodiment, the method further comprises:

- obtaining or causing obtaining updated first location information and/or updated subsequent location information; and
- routing or causing routing the vehicle based on the updated first location information and/or based on the updated subsequent location information.

In other words, in an exemplary embodiment, an original route comprising the first location and the subsequent location (e.g., for routing the vehicle to and/or along the first location and, from there, to and/or along the subsequent location) is updated and the vehicle is (caused to be) routed based on the updated route (e.g., including an updated first location and/or an updated subsequent location).

To this end, in an exemplary embodiment, the updated first location information and the updated subsequent location information are representative of an updated first location and of an updated subsequent location, respectively. For example, the updated first/subsequent location information may comprise or may consist of one or more values representative of the updated first/subsequent location, e.g. one or more updated first /subsequent (e.g., horizontal) coordinate values and one or more updated first/subsequent absolute and/or relative altitude values. In an exemplary embodiment, the updated first location and the updated subsequent location are associated with an updated first charging entity and with an updated subsequent charging entity, respectively. Correspondingly, in an exemplary embodiment, the updated first location information and the updated subsequent location information allow for localizing the updated first charging entity and the updated subsequent charging entity. It is noted that the above remarks with respect to the first and the at least one second charging entity, namely that said charging entities may comprise or may correspond to an apparatus or a system for charging electric vehicles etc., apply correspondingly to the updated first and to the updated subsequent charging entity, respectively.

In an exemplary embodiment, obtaining the updated first and/or the updated subsequent location information comprises or corresponds to receiving the updated first and the updated subsequent location information (e.g. from the at least one further apparatus) and/or to retrieving the updated first and/or the updated subsequent location information (e.g. from at least one memory of the at least one apparatus).

In an exemplary embodiment, the updated first and/or the updated subsequent location information are obtained based on varying a value of at least one parameter for planning a route of the vehicle, e.g. as compared with a corresponding value of the at least one parameter based on which the original route (e.g., including the first location and/or the subsequent location) was planned.

As an example, a required minimum and/or maximum charge at respective charging entities included by the updated route (e.g., a route including the updated first location and/or the updated subsequent location) may be less than a required minimum and/or maximum charge at respective charging entities included by the original route. In other words, in an exemplary embodiment, the updated first and/or the updated subsequent location information are obtained based on reducing a requirement regarding at least one characteristic of the charging entities along a respective (e.g., planned) route.

In an exemplary embodiment, routing or causing routing the vehicle based on the updated first location information and/or based on the updated subsequent location information comprises or corresponds to (causing) routing the vehicle from the updated first location and/or to the updated subsequent location, e.g. as described herein in detail for the first location and the subsequent location. In other words, in an exemplary embodiment, planning a route for routing the vehicle is repeated based on the updated first location information and/or based on the updated subsequent location information.

In this way, and in particular by (e.g. repeating) routing or causing routing the vehicle based on the updated first and/or the updated subsequent location information, a robustness of routing or causing routing the vehicle may advantageously be enhanced.

In an exemplary embodiment, the method further comprises:

- displaying or causing displaying, in particular to a user of the vehicle, a respective representation of at least one of:

  ○ the first location and/or further information associated with the first charging entity;
  ○ the first vehicle location and/or further information associated with the vehicle;
  ○ the remaining range of the vehicle at the first vehicle location, in particular an isoline representative of the remaining range of the vehicle at the first vehicle location;
  ○ the at least one second location and/or further information associated with the at least one second charging entity;
  ○ the at least one third location and/or further information associated with the at least one third charging entity;
  ○ the $n^{th}$ location and/or further information associated with the $n^{th}$ charging entity;
  ○ the at least one $(n + 1)^{th}$ location and/or further information associated with the at least one $(n + 1)^{th}$ charging entity;
  ○ the maximum number $n_{max}$;
  ○ the predetermined minimum number $n_{min}$;
  ○ the subsequent location and/or further information associated with the subsequent charging entity;
  ○ the at least one route deviation;
  ○ the respective route index;
  ○ the minimum route deviation subset;
  ○ the subset among the at least one subset having a maximum or minimum route index; or
  ○ the updated first location information and/or the updated subsequent location information.

In an exemplary embodiment, displaying or causing displaying, in particular to a user of the vehicle, respective representations comprises providing corresponding display information to at least one display and, based on the display information, displaying the respective representations on the at least one display. Thus, in an exemplary embodiment, the respective representation is a graphical representation. In an exemplary embodiment, the at least one display is part of or is comprised by the vehicle. For example, the at least one display may be part of (e.g., may be integrated into) an infotainment system of the vehicle. Alternatively or in addition, in an exemplary embodiment, the at least one display is the display of at least one mobile device (e.g. an IoT device, a smartphone, a tablet computer, a notebook computer, a smart watch, or a smart band) of a user of the vehicle (e.g., a driver or a passenger of the vehicle), or at least a mobile device located in the vehicle.

In an exemplary embodiment, a representation of a location comprises or corresponds to a marker for marking the location, e.g. on a map. Examples of markers include dots, circles (empty or filled), crosses, and the like. For a vehicle location, a marker may indicate that the vehicle location corresponds to the location of the vehicle, for instance, by highlighting the marker (e.g., using size, shape and/or color), or the marker may comprise or correspond a graphical representation of a vehicle. In an exemplary embodiment, a representation of the updated first and/or of the updated subsequent location information comprises or corresponds to a respective representation of the updated first location and/or the updated subsequent location.

A representation of further information associated with a charging entity may depend on the type of further information. For example, if the further information indicates a number of charging points comprised by the charging entity, in an exemplary embodiment, a corresponding representation comprises a graphical representation of said number, e.g. by displaying the number, a corresponding scale, for example a color scale, or the like. In an exemplary embodiment, the further information associated with a charging entity comprises one or more values representing, e.g., a number of charging points comprised by the charging entity, one or more characteristics of the charging entity (e.g., charging power, charging standard, etc.), the presence of further amenities associated with the charging entity, or the like.

In an exemplary embodiment, a representation of a remaining range of the vehicle at a location comprises or corresponds to an isoline (which may, e.g., be referred to as a remaining range isoline). As mentioned, an isoline may generally comprise or correspond to a line representative of a constant value on a multi-dimensional domain (e.g., on a map). Correspondingly, in an exemplary embodiment, a remaining range isoline comprises or corresponds to a line representative of a remaining range, e.g. on a map. In particular, in an exemplary embodiment, a remaining range isoline indicates, for a given location of a vehicle, an area on a map which is reachable by the vehicle from said given location based on a remaining range of the vehicle at said given location. In other words, in an exemplary embodiment, a remaining range isoline defines one or more reachable locations that are reachable by the vehicle from said given location based on the remaining range of the vehicle at said given location. In an exemplary embodiment, a remaining range isoline corresponds to a closed curve (e.g. on a map). Alternatively or in addition, in an exemplary embodiment, a representation of a remaining range of the vehicle at a location indicates the area on the map (e.g., by coloring and/or shading the area) which is reachable by the vehicle from said given location based on the remaining range of the vehicle at said given location.

In an exemplary embodiment, a representation of a number (e.g., the maximum number $n_{max}$ or the predetermined minimum number $n_{min}$) comprises or corresponds to a graphical representation of the number itself, e.g. by displaying the number, and/or to a corresponding scale, for example a color scale, or the like. Similarly, in an exemplary embodiment, a respective representation of the at least one route deviation and of the respective route index comprises or corresponds to a graphical representation of a number respectively representing the route deviation or the respective route index, e.g. by displaying the number, and/or to a corresponding scale, for example a color scale, or the like.

In an exemplary embodiment, a representation of a subset (e.g., the minimum route deviation subset and/or the subset among the at least one subset having a maximum or minimum route index) comprises respective representations of the second location(s) included in the subset. Alternatively or in addition, in an exemplary embodiment, the subset is represented by a graph or line, e.g. connecting the second location(s) included in the subset.

In an exemplary embodiment, displaying or causing display the respective representation(s) to the user of the vehicle (e.g., a driver or passenger of the vehicle) means that the respective representation(s) are displayed such that a user of the vehicle is able to perceive (e.g., see) the respective representation(s). In an exemplary embodiment, plural respective representations are (caused to be) displayed together.

In an exemplary embodiment, the method further comprises:

- obtaining or causing obtaining distance information representative of respective distances between a) at least one route location comprised by a route for routing a vehicle and b) at least one closest charging entity location of at least one closest charging entity for charging the vehicle, wherein each of the at least one route location is associated with (e.g. exactly) one of the at least one closest charging entity, wherein a distance between a respective one of the at least one route location and the respective closest charging entity location of the associated one of the at least one closest charging entity is a smallest distance among distances between the respective one of the at least one route location and the at least one closest charging entity location; and

- providing or causing providing the distance information, in particular for routing or causing routing the vehicle based on the distance information and/or for displaying or causing displaying a representation of the distance information (e.g., to a user of the vehicle).

In other words, in an exemplary embodiment, the method further comprises monitoring distances from each location of a (e.g. planned) route to a closest relevant EVCP. In an exemplary embodiment, the monitoring is performed during a planning phase (e.g., visualizing respective distance between the route and the closest EVCP before starting the route), in real time, for example during a routing phase (e.g., constantly monitoring said distances) and/or after a routing phase, i.e. post trip. By monitoring how far the vehicle has been from any EVCP on the route, a user of the vehicle may be informed about a respective (e.g. small) distance to at least one EVCP at all times during the route, which may advantageously reduce a range anxiety, e.g. before or during routing or for the future. Further, in an exemplary embodiment, the vehicle is routed or caused to be routed based on the distance information. For example, in an exemplary embodiment, the vehicle is routed such that the vehicle is at no route location comprised by the route farther away from a closest EVCP than a predetermined threshold (which may reassure a driver by staying within a safe charging corridor). Alternatively or in addition, in an exemplary embodiment, the vehicle is routed based on an additional travel time, travel distance (e.g. in kilometers) or additional costs resulting from such threshold. In an exemplary embodiment, a tradeoff between a detour and a tolerance to closest EVCP distance is set manually (e.g., by a user) and/or automatically.

As described in detail above, in accordance with exemplary embodiments of the present disclosure, EV charging fallback options may be considered in the routing of EVs in order to reduce a risk of the vehicle running out of battery, thereby reducing a range anxiety of a user of the vehicle.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

**BRIEF DESCRIPTION OF THE FIGURES**

Fig. 1          is a schematic illustration of various exemplary remaining range isolines related to exemplary embodiments of the first aspect of the invention;

Fig. 2          is a flowchart illustrating an example of a method according to the first aspect of the invention;

Fig. 3          is a schematic illustration of a vehicle and various charging entities related to exemplary embodiments of the first aspect of the invention;

Figs. 4A, 4B    are schematic illustrations of an example of routing a vehicle related to exemplary embodiments of the first aspect of the invention;

Fig. 5A         is a schematic illustration of a further example of routing a vehicle related to exemplary embodiments of the first aspect of the invention;

Fig. 5B         is a diagram relating to the further example of Fig. 5A;

Fig. 6          is a schematic illustration of routing a vehicle in accordance with exemplary embodiments of the first aspect of the invention;

Figs. 7A, 7B    are schematic illustrations of routing a vehicle in accordance with exemplary embodiments of the first aspect of the invention;

Fig. 8          exemplarily illustrates an example of a graphical user interface for setting the predetermined minimum number $n_{min}$;

Fig. 9A         is a schematic illustration of routing a vehicle related to exemplary embodiments;

Fig. 9B         is a diagram relating to the schematic illustration in Fig. 9A;

Fig. 10         is a block diagram of an example of an apparatus according to the first aspect of the invention;

Fig. 11         is a schematic illustration of examples of tangible storage media according to the first aspect of the invention.

**DETAILED DESCRIPTION OF THE FIGURES**

The following description serves to deepen the understanding of the present invention and shall be understood to complement and be read together with the description of example embodiments of the invention as provided in the above SUMMARY section of this specification.

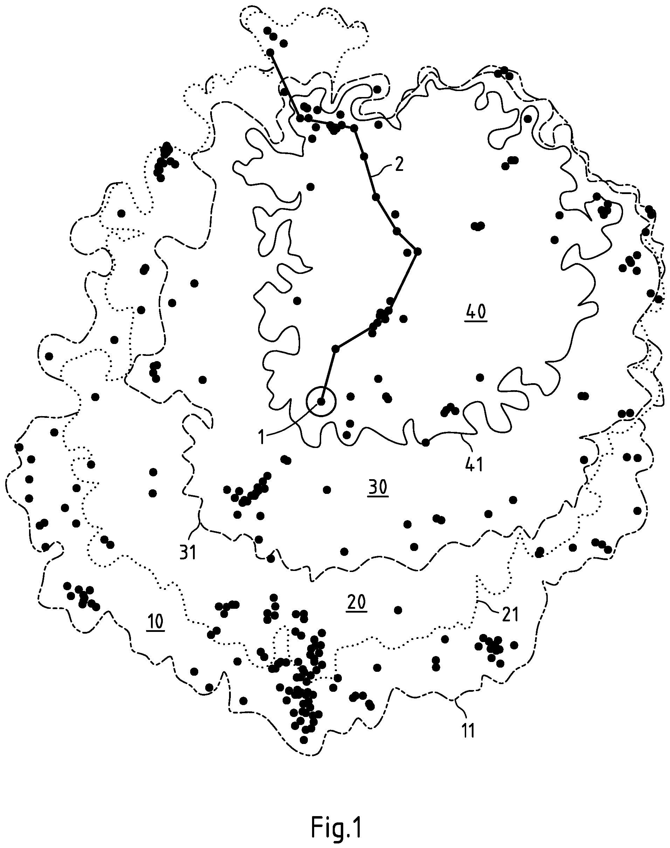

Fig. 1 schematically illustrates four exemplary isolines 11, 21, 31, 41 (examples of graphical representations of remaining ranges of a vehicle). Isolines 11, 21, 31, 41 indicate, for respective locations of a vehicle (not shown in Fig. 1) moving from an origin 1 along a route 2, respective areas 10, 20, 30, 40 (further examples of graphical representations of remaining ranges of a vehicle) reachable by the vehicle from said respective locations based on respective remaining ranges of the vehicle at said respective locations. In an exemplary embodiment, route 2, areas 10, 20, 30, 40 and/or isolines 11, 21, 31, 41 are displayed, e.g. to a user of the vehicle, as part of or overlaid on a map (not shown in Fig. 1).

The black dots in Fig. 1 represent locations of EVCPs (examples of charging entities). The EVCP locations shown in Fig. 1 are located partly within and partly outside of areas 10, 20, 30, 40 and isolines 11, 21, 31, 41. Thus, using isolines 11, 21, 31, 41 and/or areas 10, 20, 30, 40 (examples of information representative of remaining ranges of a vehicle), in an exemplary embodiment, a number of EVCPs available within a remaining distance in terms of battery power (an example of information representative of a remaining range) are determined (e.g., calculated).

As shown in Fig. 1, as a result of the vehicle moving along route 2 (i.e., as a result of a distance to a destination of the route decreasing), a number of EVCPs reachable within a driving distance corresponding to a remaining range of the vehicle decreases (as one specific example, when the distance decreases from 50 km to 27 km, the number of EVCPs may decrease from 343 to 63). In other words, a size of areas 10, 20, 30, 40 decreases as the vehicle moves along route 2. At some point along route 2 (as one specific example, at a point of route 2 at which a remaining range amounts to only 5 km) there may be no reachable EVCPs left. Fig. 1 thus shows a visualization of a number of reachable EVCPs along a route as a remaining range of a vehicle traveling along the route decreases.

In particular in view of a number of reachable EVCPs decreasing while traveling along the route, it may thus be desirable select time and place of charging an electric vehicle in an advantageous manner. In particular, a driver may not want to charge too early, as this may increase a total charge time, e.g. due to repeated and/or lengthy, in particular dispensable, charging breaks. At the same time, a driver may want to avoid charging with no alternatives left, thereby risking that the vehicle runs out of battery, additionally causing range anxiety.

As mentioned above, there may be a variety of factors that may render a planned Electric Vehicle Charging Point (EVCP) unavailable. For example, the charging infrastructure, though expanding, is not yet as ubiquitous as fuel stations, which may lead to potential occupancy issues; a planned EVCP may for instance be in use upon arrival, in particular during peak travel times. Further, maintenance or technical issues may render stations temporarily out of service, a not uncommon occurrence given the nascent state of large parts of the charging infrastructure. Further, seasonal or unexpected power outages may also affect availability, in particular in regions prone to extreme weather. Further, compatibility issues may arise, with some EVCPs potentially not supporting all types of vehicles or charging standards. Further, inaccuracies in real-time data or navigation systems may lead to an unanticipated closure of charging facilities. In particular in view of these potential issues it may be desirable to provide methods (e.g., algorithms) that allow drivers to reach their destination reliably and without significant delays, a critical factor in the broader adoption and convenience of electric vehicles.

In other words, given the current state of charging infrastructure, which may at least partially be characterized by frequent operational failures and/or an insufficient number of charging stations, e.g. to meet a corresponding demand, it may be desirable to provide solutions for ensuring an uninterrupted travel, thereby encouraging a broader EV adoption.

Against this background, the present disclosure may be understood to inter alia propose to route a vehicle in an advantageous manner, in particular based on information representative of a remaining range of the vehicle (e.g., remaining battery life) until charging and further based on locations of EVCPs (e.g. indicating their proximity) along a potential route.

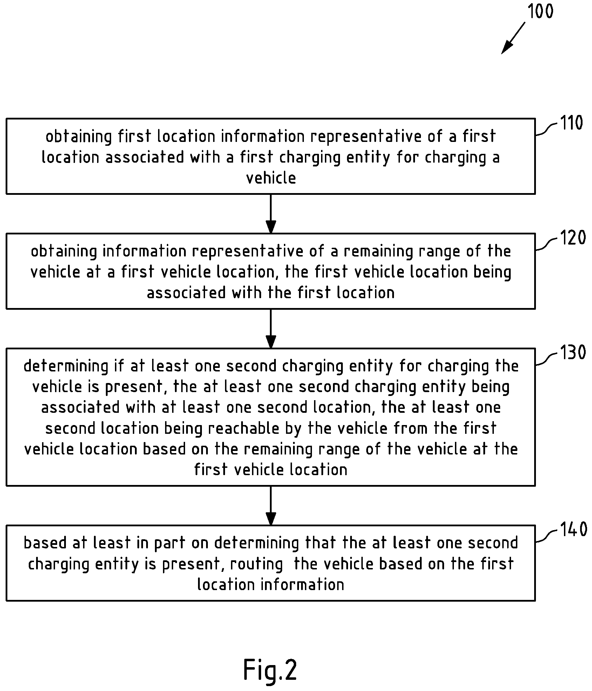

Fig. 2 is a flowchart schematically illustrating an example of a method 100 according to the first aspect of the invention. In a first step, first location information representative of a first location associated with a first charging entity for charging a vehicle is obtained (step 110). Then, information representative of a remaining range of the vehicle at a first vehicle location is obtained, whereby the first vehicle location is associated with the first location (step 120). Then, it is determined if at least one second charging entity for charging the vehicle is present, whereby the at least one second charging entity is associated with at least one second location that is reachable by the vehicle from the first vehicle location based on the remaining range of the vehicle at the first vehicle location (step 130). Based at least in part on determining that the at least one second charging entity is present, the vehicle is then routed based on the first location information (step 140).

Method 100 may for example be referred to as a method to consider EV charging fallback options in the routing of electrical vehicles to reduce range anxiety. An issue at least partly solved by method 100 may be how to reduce range anxiety by showing EV drivers that even if an EVCP where they were planning to charge is not functional, there will be other options around as this has been accounted for by the routing engine. Thus, method 100 may allow, inter alia, for EV drivers to benefit from reduced range anxiety by considering EV charging fallback options in the routing of electrical vehicles.

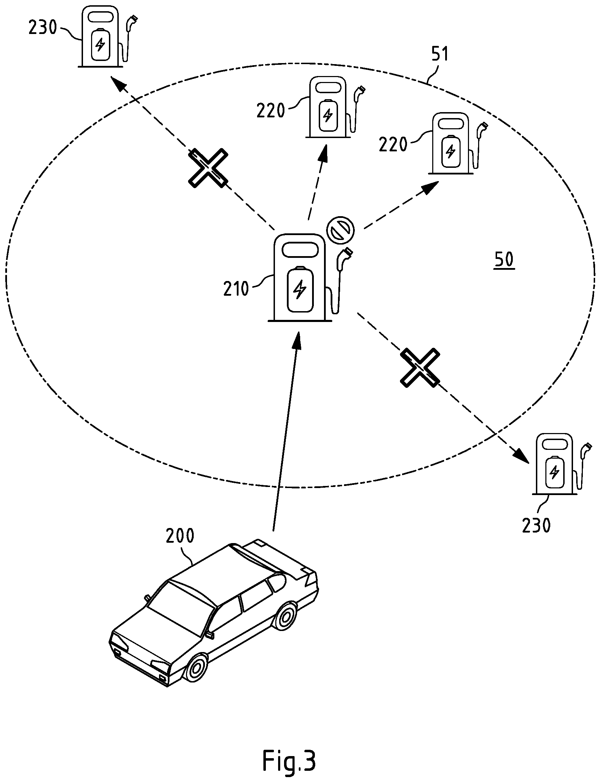

Fig. 3 schematically illustrates a vehicle 200 and various charging entities 210, 220, 230. Isoline 51 indicates an area 50 reachable by vehicle 200 from a first charging entity 210 for charging vehicle 200. At some point in time (e.g., after vehicle 200 drives to first charging entity 210), a location of vehicle 200 may essentially correspond to a location of the first charging entity 210 (an example of a first vehicle location being associated with a first location associated with a first charging entity). Isoline 51 and/or area 50 may have been determined based on a remaining range of vehicle 200 at the first charging entity 210 (an example of an area being reachable by a vehicle from a first vehicle location based on a remaining range of the vehicle at the first vehicle location).

As illustrated in Fig. 3, it may not be possible to charge vehicle 200 using first charging entity 210 (e.g., due to first charging entity 210 being occupied, unavailable, out of service, incompatible or the like), or a user of the vehicle may prefer to not charge vehicle 200 at first charging entity 210. In this case, it may be desirable to have at least one fallback option for charging the vehicle. As illustrated in Fig. 3, charging entities 220 are located within isoline 51, and thus within area 50, and, therefore, are reachable by vehicle 200 from first charging entity 210 (an example of at least one second charging entity associated with at least one second location that is reachable by a vehicle from a first vehicle location based on a remaining range of the vehicle at the first vehicle location). Correspondingly, charging entities 220 may be referred to as fallback charging entities or backup charging entities. As further illustrated in Fig. 3, charging entities 230 are located outside of isoline 51, and thus outside of area 50, and, therefore, are not reachable by vehicle 200 from first charging entity 210 (an example of at least one second charging entity being not present).

As described in detail above, it may thus be advantageous to use location information of charging entities for routing a vehicle. More specifically, as also described above, routing a vehicle based on location information of charging entities and further based on information representative of a remaining range of the vehicle may advantageously enable reducing a risk of an electric vehicle not reaching a charging facility and, as a result, running out of battery. In particular, even if a first charging entity is occupied, unavailable, out of service, incompatible or the like (or is intentionally skipped), at least one second charging entity may still be reachable and usable for charging the vehicle. This approach may also reduce range anxiety of a user (e.g., a driver or a passenger) of a vehicle.

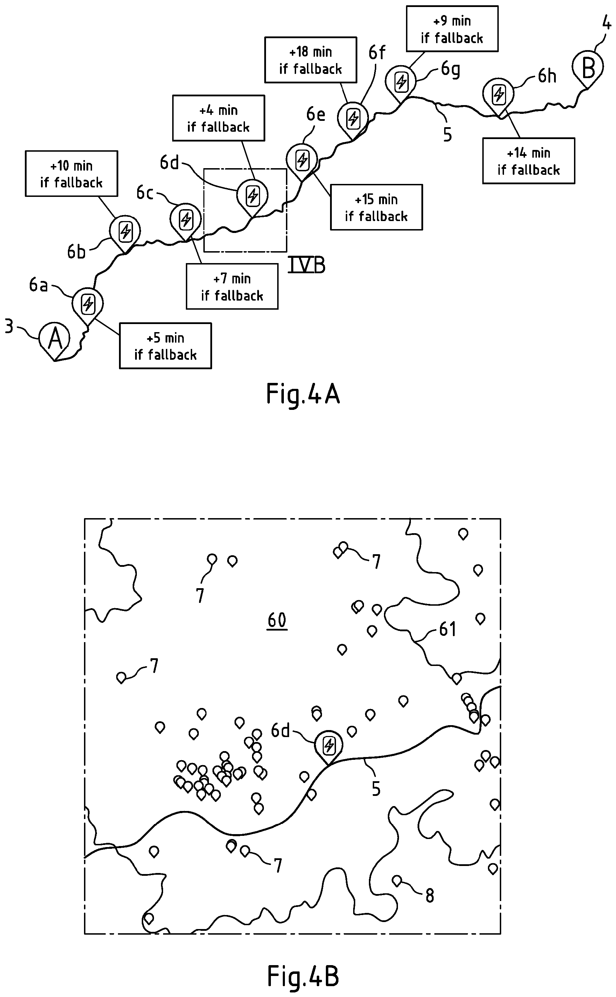

Figs. 4A and 4B schematically illustrate an example of routing a vehicle (not shown) from an origin 3 to a destination 4 along a route 5. Route 5 includes multiple planned charging stops 6a-6h (an example of (multiple) subsequent charging entities along a planned route). In an exemplary embodiment, origin 3, destination 4, route 5 and charging stops 6a-6h are displayed, e.g. to a user of the vehicle, as part of or overlaid on a map (not shown in Figs. 4A, 4B).

Now, in accordance with exemplary embodiments of the present disclosure, one or more charging entities reachable by the vehicle from planned charging stops 6a-6h based on respective remaining ranges of the vehicle at planned charging stops 6a-6h (said charging entities being an example of the at least one second charging entity) are determined for each of planned charging stops 6a-6h.

For example, Fig. 4B shows a section of Fig. 4A that includes planned charging stop 6d, i.e. the fourth planned charging stop. Fig. 4B further shows an isoline 61 indicating an area 60 that is reachable by the vehicle traveling along route 5 from charging stop 6d based on a remaining range (e.g., charge) of the vehicle at charging stop 6d. The markers in Fig. 4B represent locations of various EVCPs 7, 8 (examples of charging entities).

As illustrated in Fig. 4B, various EVCPs 7 are located within isoline 61 (and thus within area 60) and, therefore, are reachable by the vehicle from charging stop 6d (an example of at least one reachable second charging entity). Various other EVCPs 8 are located outside of isoline 61 (and thus outside of area 60) and, therefore, are not reachable by the vehicle from charging stop 6d.

If the vehicle cannot be charged at charging stop 6d, e.g. due to a respective charging entity associated with charging stop 6d being occupied, unavailable, out of service, incompatible or the like, the vehicle may thus be routed to one of EVCPs 7. Thus, a risk of the vehicle traveling along route 5 not reaching a charging facility may be reduced, thereby further reducing a range anxiety of a user of the vehicle.

As illustrated in Fig. 4A, in an exemplary embodiment, an (e.g. expected) additional travel time for a scenario in which the routed vehicle cannot be charged at the respective planned charging stop, e.g. due to a respective charging entity associated with the respective planned charging stop being occupied, unavailable, out of service, incompatible or the like, is determined for each of planned charging stops 6a-6h. As an example, an (expected) additional travel time if routing the vehicle to a second charging entity (e.g., a fallback charging entity) from charging stop 6d is desired or necessary may amount to 4 minutes.

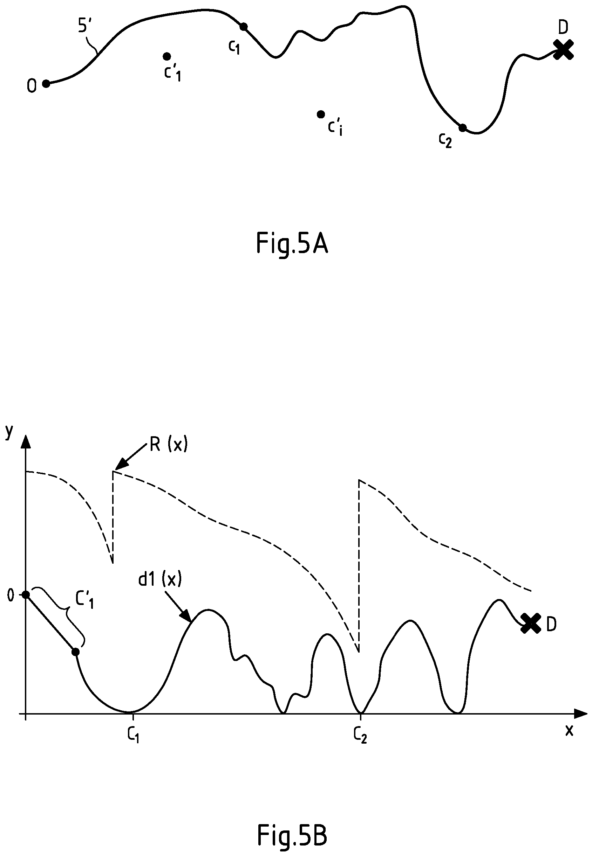

Fig. 5A schematically illustrates a further example of routing a vehicle (not shown) from an origin O to a destination D along a route 5'. Route 5' includes charging stations $c_1$, $c_2$ (or, generally, $c_i$) at which charging stops are planned as part of route 5'. Charging station $c_1$' (or, generally, $c_i$'), on the other hand, is a charging station along or around (e.g., in the vicinity of) route 5' at which no charging stop is planned as part of (e.g. original) route 5'. In an exemplary embodiment, origin O, destination D, route 5' and charging stations $c_i$, $c_i$' are displayed, e.g. to a user of the vehicle, as part of or overlaid on a map (not shown in Fig. 5A).

Fig. 5B is a diagram showing a remaining range R of a vehicle traveling along route 5' and a distance d1 of the vehicle to a first closest charging station. Both remaining range R as well as distance d1 are shown as a function of an offset x along route 5' (e.g., a traveled distance), i.e. $R(x)$ and $d1(x)$. As can be seen, at planned charging stations $c_1$, $c_2$, a distance $d1$ of the vehicle to a first closest charging station is zero, since the vehicle is at the first closest charging stations, i.e. charging stations $c_1$ and $c_2$. As can further be seen, the remaining range R gradually decreases while traveling from origin O to the first planned charging station $c_1$, from the first planned charging station $c_1$ to the second planned charging station $c_2$ and from the second planned charging station $c_2$ to destination D. As can further be seen, as a result of charging the vehicle at charging stations $c_1$, $c_2$, the remaining range R increases at the charging stations $c_1$, $c_2$. Finally, $d1(x)$ exhibits a complex dependency from the offset x along route 5' reflecting the geometrical relationship between route 5' and charging stations $c_i$, $c_i$' shown in Fig. 5A.

In particular having in mind the diagram of Fig. 5B, in an exemplary embodiment, a route satisfying the following condition is considered as a feasible route:

$$R(x) \geq d1(x), \forall x.$$

In other words, if the remaining range R of the vehicle is greater than or equal to a distance d1 of the vehicle to a first closest charging station for all values of x, the vehicle will not run out of battery power (as long as it can indeed be charged at the planned charging stations).

Similar to function $d1(x)$, functions $d2(x)$ to $dN(x)$ may be defined (with N being a natural number greater than two), respectively indicating distances $d2$ to $dN$ of the vehicle to a second closest to $N$ closest charging station (respective examples of first-level to $N$-1 level fallback charging entities).

In an exemplary embodiment, a route satisfying the following condition is considered as a first-level fallback route (e.g., a route where skipping one planned charging stop during the route is tolerable):

$$R(x) \geq d2(x), \forall x$$

Such route may be considered as an example of a route for which it is determined that at least one second charging entity associated with at least one second location reachable by the vehicle from the first vehicle location based on the remaining range of the vehicle at the first vehicle location is present.

Further, in an exemplary embodiment, a route satisfying the following condition is considered as a ($N$-1)-level fallback route (e.g., a route where skipping $N$-1 planned charging stops during the route is tolerable):

$$R(x) \geq dN(x), \forall x$$

Such route may be considered as an example of a route for which it is determined that at least one $N$th charging entity associated with at least one $N$th location reachable by the vehicle from an ($N$ - 1)th vehicle location based on the remaining range of the vehicle at the ($N$ - 1)th vehicle location is present. Referring to the exemplary embodiment regarding at least one (reachable) (n + 1)th charging entity mentioned further above, the above equation may be satisfied with $N = n + 1$ and $N - 1 = n$.

The principle of $N$ levels of EVCP fallback options may comprise determining a number of EVCPs which are within a reach of an EV at a given time. For example, if an EV still has 100 km range, with 50 EVCPs within the isoline/range, a risk of the EV running out of battery is relatively low. For each of those 50 EVCPs, distributed within said isoline, a second level isoline may be determined which may correspond to a newly formed isoline with the remaining range of the EV at each EVCP. If a user of the EV decides to go to one EVCP at 70 km, on the route, only 30 km of range may remain. If this one EVCP is closed/not available or the like, a new EVCP may only be selected within a 30 km radius. For example, there may be four EVCPs within this 30 km radius isoline. When selecting the next candidate EVCP among those four EVCPs, it may be advantageous in terms of a risk of the EV running out of battery and/or in terms of a user's range anxiety to have at least one further fallback option in case that option (i.e., the next candidate EVCP) is also not usable/suitable. Thus, according to exemplary embodiments of the present disclosure, it may be computed at any time on a route, how many level of EVCP fallbacks are possible, e.g. so that a user of the vehicle is able to make advised decisions of where to go and charge. Similarly, such feature may be extended e.g. by optimizing a route with a maximum number of fallback options.

In exemplary embodiments, respective representations of functions $R(x)$ and/or $dN(x)$ are displayed or caused to be displayed, in particular to a user of the vehicle. For instance, functions $R(x)$ and/or $dN(x)$ may be displayed as shown in Fig. 5B. Alternatively or in addition, in an exemplary embodiment, functions $R(x)$ and/or $dN(x)$ (or a difference of said functions) are displayed on a map, e.g. as a color gradient on a polyline representing the route, or the like.

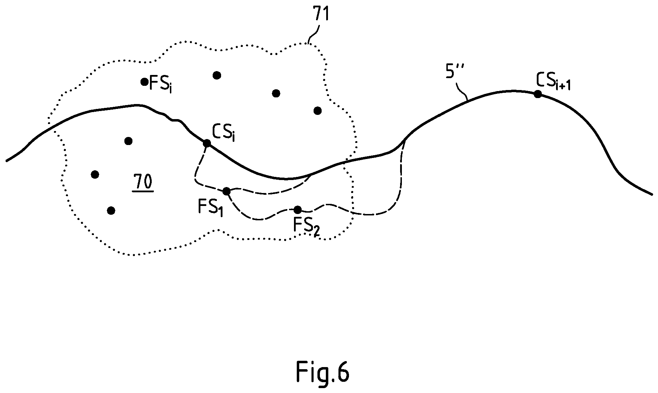

Fig. 6 schematically illustrates routing a vehicle (not shown) along a route 5". Route 5" includes charging stations $CS_i$, $CS_{i+1}$ (e.g. corresponding to planned charging stops) and various fallback stations $FS_i$, inter alia fallback stations $FS_1$, $FS_2$. Fig. 6 further shows an isoline 71 indicating an area 70 that is reachable by the vehicle from charging stop $CS_i$ based on a remaining range (e.g., charge) of the vehicle at charging stop $CS_i$. In an exemplary embodiment, route 5", charging stations $CS_i$, $CS_{i+1}$, the various fallback stations $FS_i$, isoline 71 and area 70 are displayed, e.g. to a user of the vehicle, as part of or overlaid on a map (not shown in Fig. 6).

In particular having in mind the schematic illustration of Fig. 6, in an exemplary embodiment, the minimum route deviation subset (as further described herein) is determined using the following algorithm, provided below as a pseudo code:

METHOD: Compute_Fallback_Stations ($\{CS_i\}$, $CS_i$, $S$, $N$)

LOOP: For fallback station set $FS^k \in$ Permutation ($S$, $N$)

DO:

Expected value $E(\text{Deviation}_k) = \frac{\sum_{j=1}^{N} \left\| \text{route}(CS_i, [FS_1^k .. FS_j^k], CS_{i+1}) \right\|}{N}$

RETURN: $FS^k$, $E(\text{Deviation}_k)$ such that $k = argmin(E(\text{Deviation}_k))$

Thereby, the respective elements of said algorithm may in particular be defined as follows:

∘ Number of fallback alternatives (driver's setting): $N$

○ Planned EV route $r = \{CS_i\}$

○ Currently skipped charging station, $CS_i$

○ Range function $R(\ )$: calculates a remaining range of the vehicle at a given location on a route

○ Permutation(set $S$, number $k$): ordered arrangements of $k$ distinct elements selected from a set

○ Routing function: route(origin, vias, destination)

○ Route length/duration function: $\|r\|$

○ Candidate charging stations within the range isoline at $CS_i$ : $S$

In particular by looping over the Permutations $(S, N)$, in an exemplary embodiment, the minimum route deviation subset $FS^k$ is thus computed such that a (e.g. expected) route deviation $E(\text{Deviation}_k)$ associated with the minimum route deviation subset $FS^k$ is a smallest route deviation among respective route deviations $FS^k \in$ Permutation $(S, N)$ associated with respective subsets comprising respective numbers of second charging entities greater than or equal to the predetermined minimum number $N$ of charging entities.

As described above, routing a vehicle based on a minimum route deviation subset may advantageously minimize additional delays.

In a further exemplary embodiment, if the function Compute_Fallback_Stations fails to return a list of fallback stations for every charging station $CS_i$, a route for routing the vehicle is re-computed, e.g. by increasing the min./max. charge rate at charging station parameters ($C_L$ and $C_H$, respectively) (an example of obtaining updated first and/or updated subsequent location information based on reducing a requirement regarding at least one characteristic of the charging entities along a respective route).

In an exemplary embodiment, the computation of fallback stations is then repeated for the re-computed route. In particular, a grid search may be performed, e.g. over $C_L$ and $C_H$, in particular to optimize the following quantities:

○ minimize $\Sigma_{CS_i} E(\text{Deviation}_i)$: minimize a disturbance of an ETA (estimated time of arrival), e.g. when skipping each planned stop is highly likely; and/or

○ minimize $\max(E(\text{Deviation}_i))$: minimize a disturbance of an ETA (estimated time of arrival), e.g. when there will be likely (only) one planned stop that will be skipped.

In an exemplary embodiment, performing said grid search comprises performing the following algorithm, provided below as a pseudo code:

> METHOD: Minimize_ETA_disturbance(origin, destination, $N$)
>
> LOOP: for $C_L^k, C_H^k$ in search grid
>
>     DO:
>
>       r = EV_route(origin, destination, $C_L^k, C_H^k$)
>
>       LOOP: for $CS_i \in$ r
>
>         S = spatial_search("EVCS", isoline($CS_i$, range($CS_i$)))
>
>         $FS_i, E(\text{deviation}_i)$ = Compute_Fallback_Stations($\{CS_i\}, CS_i, S, N$)
>
>       $\sum E(\text{deviation}^k) = \sum E(\text{deviation}_i)$
>
>     RETURN: $C_L^k, C_H^k, \sum E(\text{deviation}^k)$ such that $k = argmin(\sum E(\text{deviation}^k))$

In particular by looping over $C_L^k, C_H^k$ (minimum and maximum charging rate, respectively) in the search grid and further by looping over the routes r, in an exemplary embodiment, values for $C_L^k, C_H^k$ are computed for which a disturbance $\Sigma E(\text{deviation}^k)$ of an ETA (estimated time of arrival) is advantageously minimized.

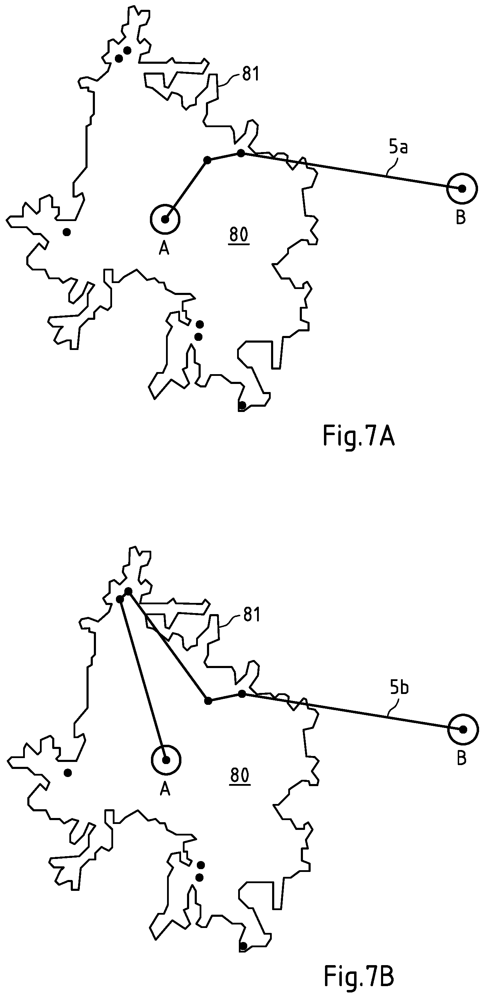

Figs. 7A, 7B schematically illustrate routing a vehicle from a point A on a route to a destination B (the origin of the route is not shown in Figs. 7A, 7B) along two different routes 5a, 5b. Point A may for example correspond to a location of the vehicle at a point in time at which a user of the vehicle may start searching for an EVCP. Routes 5a, 5b include respective charging stations corresponding to planned charging stops (illustrated as black dots along routes 5a, 5b) and various fallback stations (illustrated as black dots not along routes 5a, 5b). Figs. 7A, 7B further show an isoline 81 indicating an area 80 that is reachable by the vehicle from point A based on a remaining range of the vehicle at point A (as one example, within 25 minutes driving time). In an exemplary embodiment, routes 5a, 5b, the black dots illustrating the charging stations, isoline 81 and area 80 are displayed, e.g. to a user of the vehicle, as part of or overlaid on a map (not shown in Figs. 7A, 7B). Route 5a may correspond to a route that may add, as one example, 9 minutes deviation to the main route (e.g., a direct route from A to B) and goes through 2 EVCPs within area 80. Route 5b may go through 4 EVCPs, but may add up in total, as one example, 40 minutes deviation to the main route (e.g., a direct route from A to B), when counting visiting all ECVPs.

In particular in view of example routes 5a, 5b, it may be desirable to define an optimal charging route from a point A to a destination B, e.g. from among multiple possible routes from A to B (such as, e.g., example routes 5a, 5b). Ideally, charging should not require deviation from a main (e.g., planned) route. However, for instance areas distant from cities may provide fewer options for charging. In view of this, according to exemplary embodiments of the present disclosure, defining an optimal charging route may include consideration of both a minimum (e.g. possible) deviation from the main route and a maximum (e.g. possible) number of EVCPs along the route.

In particular having in mind the schematic illustrations of Figs. 7A, 7B, in an exemplary embodiment, obtaining a respective route index (as further described herein) comprises performing the following steps:

1. Select a location of an EVCP at the main route as a start point (as one example, start point coordinates may be (51.81337, 13.16428)). The start point may also be referred to as a decision point.

2. Build an isoline of possible car reach within left charge (e.g., representing a remaining range of a vehicle) around the start point (as one example, car reach within left charge may correspond to a remaining travel time of 45 minutes)

3. List all available EVCPs in an area defined by the isoline (as one example, 8 EVCPs may be found)

4. Compute a matrix of respective driving durations between the found EVCPs, including the start point (SP) and a destination (D) (as one example, destination coordinates may be (51.848781, 13.715595)). An example of such a matrix is shown below as Table 1:

**Table 1:** Example matrix of driving durations between EVCPs, start point SP and destination D.

|  | 0 | 1 | 2 | 3 | 4 | 5 | 6 | 7 | SP | D |
|---|---|---|---|---|---|---|---|---|---|---|
| 0 | NaN | 21.750000 | 25.616667 | 50.866667 | 49.483333 | 54.050000 | 58.700000 | 58.366667 | 35.716667 | 58.366667 |
| 1 | 21.750000 | NaN | 18.066667 | 43.350000 | 41.950000 | 46.516667 | 51.166667 | 50.833333 | 28.183333 | 50.833333 |
| 2 | 25.616667 | 18.066667 | NaN | 32.366667 | 30.966667 | 35.533333 | 40.183333 | 39.850000 | 17.200000 | 42.333333 |
| 3 | 50.866667 | 43.350000 | 32.366667 | NaN | 34.100000 | 36.800000 | 34.716667 | 34.383333 | 20.333333 | 64.116667 |
| 4 | 49.483333 | 41.950000 | 30.966667 | 34.100000 | NaN | 7.816667 | 22.266667 | 21.933333 | 17.150000 | 38.266667 |
| 5 | 54.050000 | 46.516667 | 35.533333 | 36.800000 | 7.816667 | NaN | 21.800000 | 21.466667 | 24.100000 | 31.583333 |
| 6 | 58.700000 | 51.166667 | 40.183333 | 34.716667 | 22.266667 | 21.800000 | NaN | 3.983333 | 23.366667 | 52.950000 |
| 7 | 58.366667 | 50.833333 | 39.850000 | 34.383333 | 21.933333 | 21.466667 | 3.983333 | NaN | 22.183333 | 51.766667 |
| SP | 35.716667 | 28.183333 | 17.200000 | 20.333333 | 17.150000 | 24.100000 | 23.366667 | 22.183333 | NaN | 47.550000 |
| D | 58.366667 | 50.833333 | 42.333333 | 64.116667 | 38.266667 | 31.583333 | 52.950000 | 51.766667 | 47.550000 | NaN |

5. Loop through route combinations of found EVCPs, starting from start point and ending with destination, e.g. in order to find paths that meet user defined limitations

○ An example of a user defined limitation may be a (e.g. maximum) time of deviation (as specific examples, 30 or 60 minutes)
○ A further example of a user defined limitation may be a (e.g. minimum) number of fallbacks
○ A path may be a particular combination of EVCPs to visit in the isoline (one example of a path may be [0->2->4->1->3->5->6->7])
○ Paths that do not meet criteria such as the user defined limitation(s) may be filtered out during computation, e.g. in the following manner: if a start of a path reaches a user defined limitation, all paths with this part may be filtered out, for example:

• [0] - deviation 47 minutes - meets criterion of deviation less than 60 minutes
• [0->2] - deviation 56 minutes - meets criterion of deviation less than 60 minutes
• [0->2->5] - deviation 81 minutes - does not meet criterion of deviation less than 60 minutes -> all paths starting with [0->2->5] may be excluded from next search

6. Calculate (or compute) a ranking index *RI*, or path index (examples of the route index) for paths that meet the (e.g. deviation time) limitation(s), using the following formula:

$$RI = Scale_{0,10}\left(\left(Scale_{DevRate}\left(^1/_{RouteDeviation}\right)\right) \times \left(Scale_{FallbackRate}(FallbackNumber)\right)\right)$$

○ *Route Deviation* - may represent a deviation from a baseline duration (start point to destination), e.g. in minutes (an example of the at least one route deviation)
○ *FallbackNumber* - may represent a number of EVCPs in the path (an example of the respective number of second charging entities)
○ Scale - may correspond to a MinMax scaling function
○ *DevRate* and *FallbackRate* - may be rates that reflect an impact of the route deviation and the fallback number on the ranking index. In one example, said rates may correspond to 0.3 and 1.1, respectively

In an exemplary embodiment, the ranking index is thus built in such a way that paths with a higher number of fallbacks and/or with a lower route deviation receive a higher index as compared to paths with a lower number of fallbacks and/or a higher route deviation. An example table is shown below:

**Table 2:** Example table of ranking indices for different paths.

| Path | Route Deviation | Fallback number | Deviation scaled | Ranking index |
|---|---|---|---|---|
| [4-> 5] | 9 | 2 | 2.7 | 10 |
| [7->6->4->5] | 40 | 4 | 1.2 | 8.7 |
| [2->4->5] | 40 | 3 | 1.2 | 6.2 |

Referring to Figs. 7A, 7B, Fig. 7A shows a path via [4 -> 5], while Fig. 7B shows a path via [7->6->4->5].

In an exemplary embodiment, the algorithm described above (comprising steps 1 to 6) is thus used to define an optimal route from a point of view of minimizing a route deviation while keeping as many and/or at least several options to charge (fallbacks).

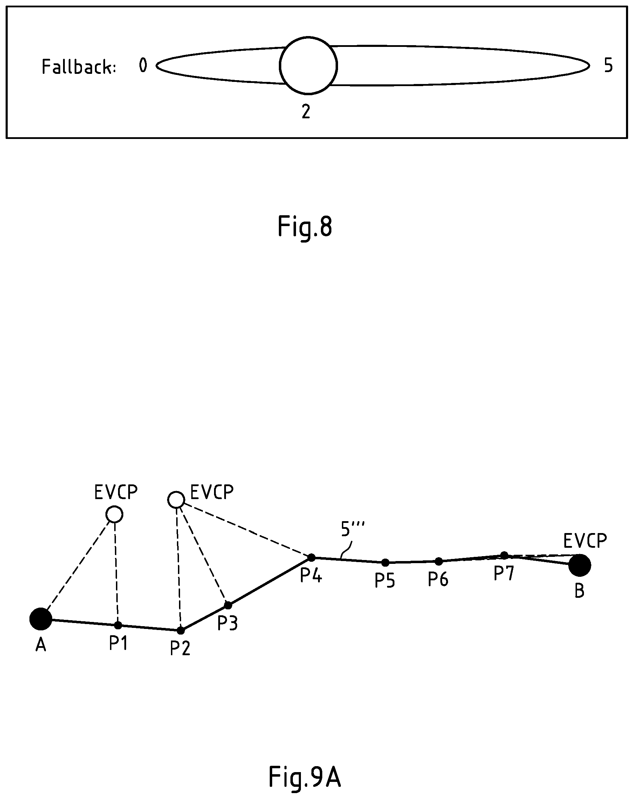

Fig. 8 exemplarily illustrates an example of a graphical user interface for setting the predetermined minimum number $n_{min}$. In particular, Fig. 8 shows a slide bar (an example of a graphical representation) exposing the fallback parameter (an example of the predetermined minimum number $n_{min}$) . In addition to displaying the predetermined minimum number $n_{min}$, in an exemplary embodiment, the slide bar advantageously allows for setting a desired predetermined minimum number $n_{min}$ by a user.

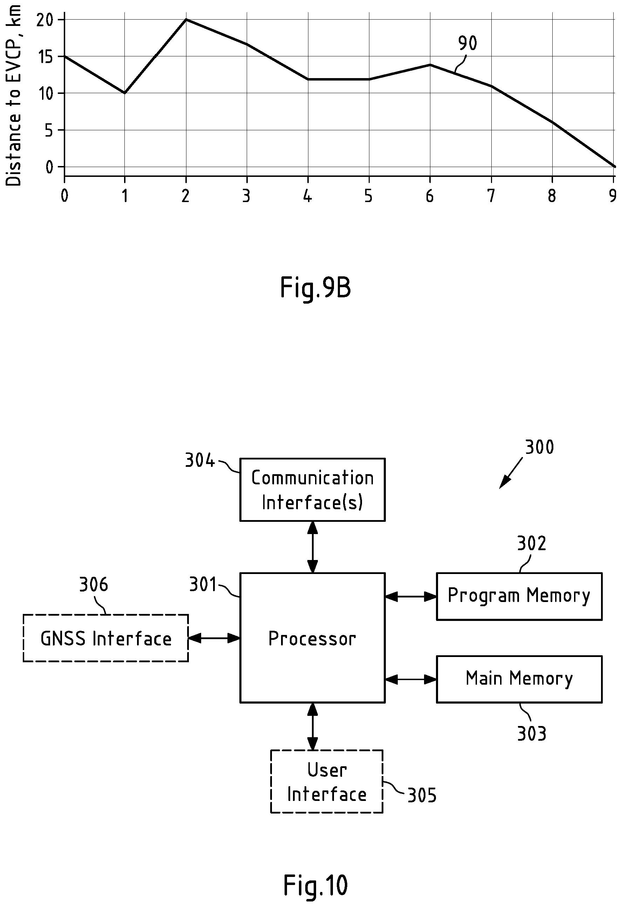

Figs. 9A and 9B in particular illustrate obtaining distance information as further described herein.

Fig. 9A schematically illustrates routing a vehicle (not shown) from an origin A to a destination B along a route 5‴ via charging points P1-P7. Further, Fig. 9A shows respective distances between a) origin A, charging points P1-P7 and destination B and b) a respective closest EVCP as dashed lines. In an exemplary embodiment, route 5‴, origin A, destination B, charging points P1-P7 and said respective distances are displayed, e.g. to a user of the vehicle, as part of or overlaid on a map (not shown in Fig. 9A). Alternatively or in addition to distances, in an exemplary embodiment, corresponding travel times are determined and/or displayed.

An example of respective distances and travel times (or durations) from a respective route point of a route to a respective closest EVCP for an example route is shown below:

**Table 3:** Example table of distances and travel times to closest EVCP.

| Route points | Closest EVCP | Duration to EVCP, minutes | Distance to EVCP, km |
|---|---|---|---|
| 0 | EVCP 1 | 17.0 | 15.0 |
| 1 | EVCP 1 | 12.0 | 10.0 |
| 2 | EVCP 2 | 21.0 | 20.0 |
| 3 | EVCP 2 | 19.0 | 17.0 |
| 4 | EVCP 2 | 18.0 | 12.0 |
| 5 | EVCP 2 | 18.0 | 12.0 |
| 6 | EVCP 3 | 17.0 | 14.0 |
| 7 | EVCP 3 | 16.0 | 11.0 |
| 8 | EVCP 3 | 9.0 | 6.0 |
| 9 | EVCP 3 | 3.0 | 0.0 |

It may be seen from the example of Table 3 that a maximum distance to a closest EVCP did not exceed 20 km (-20 minutes travel time) from a main route and that a mean distance amounted to approx. 12 km. Considering such values as route distance, duration and also a number of EVCPs within selected travel time and/or distance may advantageously contribute to reducing a driver's range anxiety.

Fig. 9B is a diagram showing a curve 90 representing respective distances to a closest EVCP for different locations (0 to 9) along route 5''', thus visualizing the values shown in Table 3.

According to various exemplary embodiments, said distance information is used in at least one of the following ways:

  ◦ Display to a user of the vehicle (e.g., ahead of a trip, during the trip or after the trip) how far the vehicle will be at maximum from the closest EVCP
  ◦ Display to a user of the vehicle (e.g., ahead of a trip, during the trip or after the trip) how far the vehicle will be at maximum from the 2nd closest EVCP (first-level fallback)
  ◦ Display to a user of the vehicle (e.g., ahead of a trip, during the trip or after the trip) how far the vehicle will be at maximum from the $N$ closest EVCP ($N$-1 fallbacks) ($N$ may be defined by the user)
  ◦ Display to a user of the vehicle (e.g., ahead of a trip, during the trip or after the trip) how far the vehicle will be on average from the closest EVCP
  ◦ Display to a user of the vehicle (e.g., ahead of a trip, during the trip or after the trip) how far the vehicle will be on average from the $N$-closest EVCP
  ◦ Routing to a destination with given constraints

    ◦ Determining a route which is never more than 30km from an EVCP

    ◦ Determining a route which is never more than X (e.g., EV range/2) km away from an EVCP, e.g. if EV range is 80 km, determine route that is not more than 40 km away from an EVCP

    ◦ Once the vehicle is at half its range, determine a route staying within, e.g., 40 km from an EVCP (before that, route may be further away from closest EVCP)

Fig. 10 is a block diagram of an example of an apparatus 300 according to the first aspect of the invention and/or of the at least one further apparatus (as further described above).

Apparatus 300 comprises a processor 301. Processor 301 may represent a single processor or two or more processors, which are for instance at least partially coupled, for instance via a bus. Processor 301 may use program memory 302 and main memory 303 to execute a program code stored in program memory 302 (for instance program code causing apparatus 300 to perform embodiments of the different methods disclosed herein, when executed on processor 301). Some or all of memories 302 and 303 may also be included into processor 301. One of or both of memories 302 and 303 may be fixedly connected to processor 301 or at least partially removable from processor 301. Program memory 302 may for instance be a non-volatile memory. It may for instance be a FLASH memory, any of a ROM, PROM, EPROM and EEPROM memory or a hard disc, to name but a few examples. Program memory 302 may also comprise an operating system for processor 301. Main memory 303 may for instance be a volatile memory. It may for instance be a RAM or DRAM memory, to give but a few non-limiting examples. It may for instance be used as a working memory for processor 301 when executing an operating system and/or programs.

Processor 301 further controls one or more communication interfaces 304 configured to receive and/or send information. For instance, apparatus 300 may be configured to communicate with a server (e.g. a routing server or a routing server cloud). Such a communication may for instance comprise providing (transmitting) information from apparatus 300 to the server, or vice versa. The communication may for instance be based on a (e.g. partly) wireless connection. The communication interface 304 may thus comprise circuitry such as modulators, filters, mixers, switches and/or one or more antennas to allow transmission and/or reception of radio signals. In embodiments of the invention, communication interface 304 is inter alia configured to allow communication according to a 2G/3G/4G/5G cellular communication system and/or a non-cellular communication system, such as for instance a WLAN network and/or a Bluetooth network.

Processor 301 further controls a user interface 305 configured to present information to a user of apparatus 300 to receive information from such a user, such as setting a desired predetermined minimum number $n_{min}$, e.g. using the slide bar shown in Fig. 8. User interface 305 may for instance be the standard user interface via which a user of apparatus 300 controls other functionality thereof, such as making phone calls, browsing the Internet, etc.

Processor 301 may further control a GNSS interface 306 configured to receive position information of a GNSS such as Global Positioning System (GPS), Galileo, Global Navigation Satellite System (i.e. "Globalnaja Nawigazionnaja Sputnikowaja Sistema", GLONASS) or Quasi-Zenith Satellite System (QZSS). In case of apparatus 300, the location information of GNSS interface 306 (potentially in connection with further sensors of apparatus 300, such as an inertial sensor, an accelerometer or gyroscope) may be used in order to obtain position information, e.g. for determining the first vehicle location and/or a (e.g. present) location of the vehicle.

The components 302-306 of apparatus 300 may for instance be connected with processor 301 by means of one or more serial and/or parallel busses.

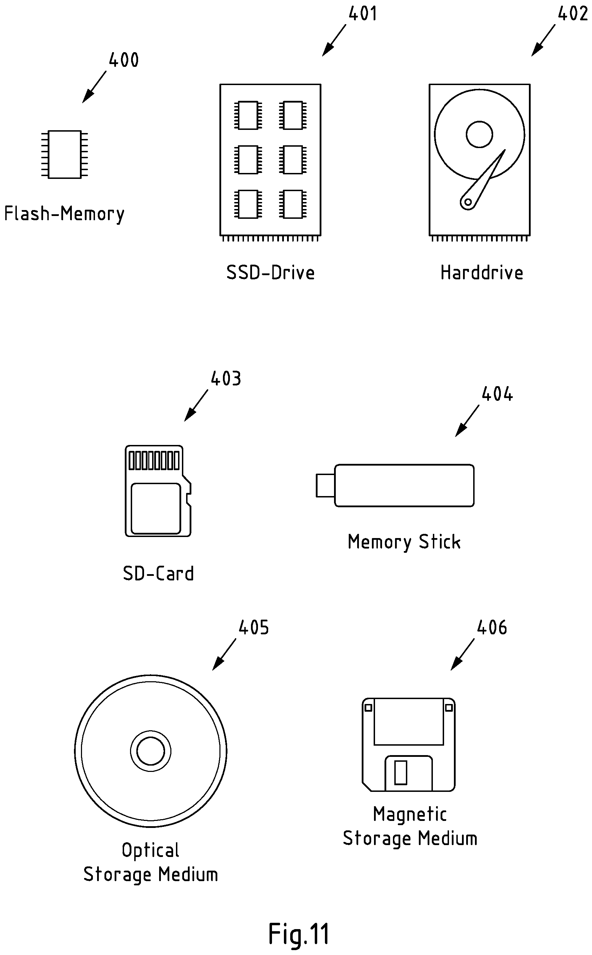

Fig. 11 schematically illustrates examples of tangible and non-transitory computer-readable storage media according to the first aspect of the invention that may for instance be used to implement memory 302 of Fig. 10. To this end, Fig. 11 displays a flash memory 400, which may for instance be soldered or bonded to a printed circuit board, a solid-state drive 401 comprising a plurality of memory chips (e.g. Flash memory chips), a magnetic hard drive 402, a Secure Digital (SD) card 403, a Universal Serial Bus (USB) memory stick 404, an optical storage medium 405 (such as for instance a CD-ROM or DVD) and a magnetic storage medium 406.

The following example embodiments of the invention are also disclosed:

Embodiment 1

A method performed by at least one apparatus, the method comprising:

- obtaining or causing obtaining first location information representative of a first location associated with a first charging entity for charging a vehicle;
- obtaining or causing obtaining information representative of a remaining range of the vehicle at a first vehicle location, the first vehicle location being associated with the first location;
- determining or causing determining if at least one second charging entity for charging the vehicle is present, the at least one second charging entity being associated with at least one second location, the at least one second location being reachable by the vehicle from the first vehicle location based on the remaining range of the vehicle at the first vehicle location; and
- based at least in part on determining or causing determining that the at least one second charging entity is present, routing or causing routing the vehicle based on the first location information.

Embodiment 2

The method of embodiment 1, further comprising:

- obtaining or causing obtaining second location information representative of the at least one second location; and
- holding available or causing holding available, at least temporarily, the second location information for routing or causing routing the vehicle.

Embodiment 3

The method of any of embodiments 1 or 2, further comprising:

- obtaining or causing obtaining trigger information, the trigger information causing at least one of:

  ◦ stopping or causing stopping routing the vehicle based on the first location information;
  ◦ adapting or causing adapting routing the vehicle based on the first location information; or
  ◦ routing or causing routing the vehicle based on second location information representative of the at least one second location.

Embodiment 4

The method of any of embodiments 1 to 3, further comprising:

- based at least in part on determining or causing determining that the at least one second charging entity is not present, routing or causing routing the vehicle based on further location information representative of at least one further location associated with at least one further charging entity different from the first charging entity.

Embodiment 5

The method of any of embodiments 1 to 4, further comprising:

- obtaining or causing obtaining information representative of a remaining range of the vehicle at a second vehicle location, the second vehicle location being associated with at least one of the at least one second location;
- determining or causing determining if at least one third charging entity for charging the vehicle is present, the at least one third charging entity being associated with at least one third location, the at least one third location being reachable by the vehicle from the second vehicle location based on the remaining range of the vehicle at the second vehicle location; and
- based at least in part on determining or causing determining that the at least one third charging entity is present, routing or causing routing the vehicle based on the first location information and/or based on second location information representative of the at least one second location.

Embodiment 6

The method of any of embodiments 1 to 5, comprising:

- obtaining or causing obtaining $n^{th}$ location information representative of an $n^{th}$ location associated with an $n^{th}$ charging entity for charging the vehicle, with n being a natural number;
- obtaining or causing obtaining information representative of a remaining range of the vehicle at an $n^{th}$ vehicle location, the $n^{th}$ vehicle location being associated with the $n^{th}$ location;
- determining or causing determining if at least one $(n + 1)^{th}$ charging entity for charging the vehicle is present, the at least one $(n + 1)^{th}$ charging entity being associated with at least one $(n + 1)^{th}$ location, the at least one $(n + 1)^{th}$ location being reachable by the vehicle from the $n^{th}$ vehicle location based on the remaining range of the vehicle at the $n^{th}$ vehicle location; and
- based at least in part on determining or causing determining that the at least one $(n + 1)^{th}$ charging entity is present, routing or causing routing the vehicle based on the $n^{th}$ location information.

Embodiment 7

The method of embodiment 6, further comprising:

- determining or causing determining, based on a location of the vehicle and a remaining range of the vehicle at the location, a maximum number $n_{max}$ associated with the location, wherein the at least one $(n + 1)^{th}$ location is reachable by the vehicle from the $n^{th}$ vehicle location based on the remaining range of the vehicle at the $n^{th}$ vehicle location only for $n \leq n_{max}$.

Embodiment 8

The method of any of embodiments 6 or 7, further comprising:

- obtaining or causing obtaining information representative of a predetermined minimum number $n_{min}$, wherein the at least one $(n + 1)^{th}$ location is to be reachable by the vehicle from the $n^{th}$ vehicle location based on the remaining range of the vehicle at the $n^{th}$ vehicle location for $n \leq n_{min}$; and
- routing or causing routing the vehicle based on $n_{min}$.

Embodiment 9

The method of any of embodiments 1 to 8, further comprising:

- obtaining or causing obtaining subsequent location information representative of a subsequent location associated with a subsequent charging entity for charging the vehicle, wherein the vehicle is to be charged using the subsequent charging entity subsequent to being charged using the first charging entity;
- routing or causing routing the vehicle based on the first location information and based on the subsequent location information.

Embodiment 10

The method of embodiment 9, wherein routing or causing routing the vehicle based on the first location information and based on the subsequent location information comprises:

- determining or causing determining information representative of at least one route deviation, wherein each of the at least one route deviation indicates a deviation of

    1) a respective route from the first location to the subsequent location via a respective subset of the at least one second location to
    2) a direct route from the first location to the subsequent location; and

- routing or causing routing the vehicle based on the at least one route deviation.

Embodiment 11

The method of embodiment 10, wherein routing or causing routing the vehicle based on the at least one route deviation comprises:

- determining or causing determining a minimum route deviation subset of the at least one second charging entity, wherein a number of second charging entities comprised by the minimum route deviation subset is greater than or equal to a predetermined minimum number of charging entities, and wherein a route deviation associated with the minimum route deviation subset is a smallest route deviation among respective route deviations associated with respective subsets comprising respective numbers of second charging entities greater than or equal to the predetermined minimum number of charging entities; and
- routing or causing routing the vehicle based on the minimum route deviation subset.

Embodiment 12

The method of any of embodiments 10 or 11, wherein routing or causing routing the vehicle based on the at least one route deviation comprises:

- obtaining or causing obtaining, for each of at least one subset of the at least one second location, information representative of a respective route index based on the at least one route deviation and based on a respective number of second charging entities associated with the respective subset; and
- routing or causing routing the vehicle based on a subset among the at least one subset having a maximum or minimum route index.

Embodiment 13

The method of any of embodiments 1 to 12, comprising:

- obtaining or causing obtaining updated first location information and/or updated subsequent location information; and
- routing or causing routing the vehicle based on the updated first location information and/or based on the updated subsequent location information.

Embodiment 14

The method of any of embodiments 1 to 13, further comprising:

- displaying or causing displaying, in particular to a user of the vehicle, a respective representation of at least one of:

  ◦ the first location and/or further information associated with the first charging entity;
  ◦ the first vehicle location and/or further information associated with the vehicle;
  ◦ the remaining range of the vehicle at the first vehicle location, in particular an isoline representative of the remaining range of the vehicle at the first vehicle location;
  ◦ the at least one second location and/or further information associated with the at least one second charging entity;
  ◦ the at least one third location and/or further information associated with the at least one third charging entity;
  ◦ the $n^{th}$ location and/or further information associated with the $n^{th}$ charging entity;
  ◦ the at least one $(n + 1)^{th}$ location and/or further information associated with the at least one $(n + 1)^{th}$ charging entity;
  ◦ the maximum number $n_{max}$;
  ◦ the predetermined minimum number $n_{min}$;
  ◦ the subsequent location and/or further information associated with the subsequent charging entity;
  ◦ the at least one route deviation;
  ◦ the respective route index;
  ◦ the minimum route deviation subset;
  ◦ the subset among the at least one subset having a maximum or minimum route index; or
  ◦ the updated first location information and/or the updated subsequent location information.

Embodiment 15

An apparatus comprising means for performing the method of any of embodiments 1 to 14.

Embodiment 16

A system comprising means for performing the method of any of embodiments 1 to 14.

Embodiment 17

A computer program comprising instructions, which, when executed by an apparatus, cause the apparatus to perform the method of any of embodiments 1 to 14.

Embodiment 18

A computer-readable storage medium having stored thereon the computer program of embodiment 17.
Any presented connection in the described embodiments is to be understood in a way that the involved components are operationally coupled. Thus, the connections can be direct or indirect with any number or combination of intervening elements, and there may be merely a functional relationship between the components.
Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and

(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method performed by at least one apparatus, the method comprising:

   - obtaining or causing obtaining first location information representative of a first location associated with a first charging entity for charging a vehicle;
   - obtaining or causing obtaining information representative of a remaining range of the vehicle at a first vehicle location, the first vehicle location being associated with the first location;
   - determining or causing determining if at least one second charging entity for charging the vehicle is present, the at least one second charging entity being associated with at least one second location, the at least one second location being reachable by the vehicle from the first vehicle location based on the remaining range of the vehicle at the first vehicle location; and
   - based at least in part on determining or causing determining that the at least one second charging entity is present, routing or causing routing the vehicle based on the first location information.

2. The method of claim 1, further comprising:

   - obtaining or causing obtaining second location information representative of the at least one second location; and
   - holding available or causing holding available, at least temporarily, the second location information for routing or causing routing the vehicle.

3. The method of any of claims 1 or 2, further comprising:

   - obtaining or causing obtaining trigger information, the trigger information causing at least one of:

      ◦ stopping or causing stopping routing the vehicle based on the first location information;
      ◦ adapting or causing adapting routing the vehicle based on the first location information; or
      ◦ routing or causing routing the vehicle based on second location information representative of the at least one second location.

4. The method of any of claims 1 to 3, further comprising:

- based at least in part on determining or causing determining that the at least one second charging entity is not present, routing or causing routing the vehicle based on further location information representative of at least one further location associated with at least one further charging entity different from the first charging entity.

5. The method of any of claims 1 to 4, further comprising:

- obtaining or causing obtaining information representative of a remaining range of the vehicle at a second vehicle location, the second vehicle location being associated with at least one of the at least one second location;
- determining or causing determining if at least one third charging entity for charging the vehicle is present, the at least one third charging entity being associated with at least one third location, the at least one third location being reachable by the vehicle from the second vehicle location based on the remaining range of the vehicle at the second vehicle location; and
- based at least in part on determining or causing determining that the at least one third charging entity is present, routing or causing routing the vehicle based on the first location information and/or based on second location information representative of the at least one second location.

6. The method of any of claims 1 to 5, comprising:

- obtaining or causing obtaining $n^{th}$ location information representative of an $n^{th}$ location associated with an $n^{th}$ charging entity for charging the vehicle, with in being a natural number;
- obtaining or causing obtaining information representative of a remaining range of the vehicle at an $n^{th}$ vehicle location, the $n^{th}$ vehicle location being associated with the $n^{th}$ location;
- determining or causing determining if at least one $(n + 1)^{th}$ charging entity for charging the vehicle is present, the at least one $(n + 1)^{th}$ charging entity being associated with at least one $(n + 1)^{th}$ location, the at least one $(n + 1)^{th}$ location being reachable by the vehicle from the $n^{th}$ vehicle location based on the remaining range of the vehicle at the $n^{th}$ vehicle location; and
- based at least in part on determining or causing determining that the at least one $(n + 1)^{th}$ charging entity is present, routing or causing routing the vehicle based on the $n^{th}$ location information.

7. The method of claim 6, further comprising:

- determining or causing determining, based on a location of the vehicle and a remaining range of the vehicle at the location, a maximum number $n_{max}$ associated with the location, wherein the at least one $(n + 1)^{th}$ location is reachable by the vehicle from the $n^{th}$ vehicle location based on the remaining range of the vehicle at the $n^{th}$ vehicle location only for $n \leq n_{max}$.

8. The method of any of claims 6 or 7, further comprising:

- obtaining or causing obtaining information representative of a predetermined minimum number $n_{min}$, wherein the at least one $(n + 1)^{th}$ location is to be reachable by the vehicle from the $n^{th}$ vehicle location based on the remaining range of the vehicle at the $n^{th}$ vehicle location for $n \leq n_{min}$; and
- routing or causing routing the vehicle based on $n_{min}$.

9. The method of any of claims 1 to 8, further comprising:

- obtaining or causing obtaining subsequent location information representative of a subsequent location associated with a subsequent charging entity for charging the vehicle, wherein the vehicle is to be charged using the subsequent charging entity subsequent to being charged using the first charging entity;
- routing or causing routing the vehicle based on the first location information and based on the subsequent location information.

10. The method of claim 9, wherein routing or causing routing the vehicle based on the first location information and based on the subsequent location information comprises:

- determining or causing determining information representative of at least one route deviation, wherein each of the at least one route deviation indicates a deviation of

1) a respective route from the first location to the subsequent location via a respective subset of the at least one second location to
2) a direct route from the first location to the subsequent location; and

- routing or causing routing the vehicle based on the at least one route deviation.

11. The method of claim 10, wherein routing or causing routing the vehicle based on the at least one route deviation comprises:

- determining or causing determining a minimum route deviation subset of the at least one second charging entity, wherein a number of second charging entities comprised by the minimum route deviation subset is greater than or equal to a predetermined minimum number of charging entities, and wherein a route deviation associated with the minimum route deviation subset is a smallest route deviation among respective route deviations associated with respective subsets comprising respective numbers of second charging entities greater than or equal to the predetermined minimum number of charging entities; and
- routing or causing routing the vehicle based on the minimum route deviation subset.

12. The method of any of claims 10 or 11, wherein routing or causing routing the vehicle based on the at least one route deviation comprises:

- obtaining or causing obtaining, for each of at least one subset of the at least one second location, information representative of a respective route index based on the at least one route deviation and based on a respective number of second charging entities associated with the respective subset; and
- routing or causing routing the vehicle based on a subset among the at least one subset having a maximum or minimum route index.

13. The method of any of claims 1 to 12, comprising:

- obtaining or causing obtaining updated first location information and/or updated subsequent location information; and
- routing or causing routing the vehicle based on the updated first location information and/or based on the updated subsequent location information.

14. The method of any of claims 1 to 13, further comprising:

- displaying or causing displaying, in particular to a user of the vehicle, a respective representation of at least one of:

  ◦ the first location and/or further information associated with the first charging entity;
  ◦ the first vehicle location and/or further information associated with the vehicle;
  ◦ the remaining range of the vehicle at the first vehicle location, in particular an isoline representative of the remaining range of the vehicle at the first vehicle location;
  ◦ the at least one second location and/or further information associated with the at least one second charging entity;
  ◦ the at least one third location and/or further information associated with the at least one third charging entity;
  ◦ the $n^{th}$ location and/or further information associated with the $n^{th}$ charging entity;
  ◦ the at least one $(n+1)^{th}$ location and/or further information associated with the at least one $(n+1)^{th}$ charging entity;
  ◦ the maximum number $n_{max}$;
  ◦ the predetermined minimum number $n_{min}$;
  ◦ the subsequent location and/or further information associated with the subsequent charging entity;
  ◦ the at least one route deviation;
  ◦ the respective route index;
  ◦ the minimum route deviation subset;
  ◦ the subset among the at least one subset having a maximum or minimum route index; or
  ◦ the updated first location information and/or the updated subsequent location information.

15. An apparatus comprising means for performing the method of any of claims 1 to 14.

**16.** A system comprising means for performing the method of any of claims 1 to 14.

**17.** A computer program comprising instructions, which, when executed by an apparatus, cause the apparatus to perform the method of any of claims 1 to 14.

**18.** A computer-readable storage medium having stored thereon the computer program of claim 17.

Fig.1

100

obtaining first location information representative of a first location associated with a first charging entity for charging a vehicle ⌐110

obtaining information representative of a remaining range of the vehicle at a first vehicle location, the first vehicle location being associated with the first location ⌐120

determining if at least one second charging entity for charging the vehicle is present, the at least one second charging entity being associated with at least one second location, the at least one second location being reachable by the vehicle from the first vehicle location based on the remaining range of the vehicle at the first vehicle location ⌐130

based at least in part on determining that the at least one second charging entity is present, routing the vehicle based on the first location information ⌐140

Fig.2

Fig.3

Fig.4A

Fig.4B

Fig.5A

Fig.5B

Fig.6

Fig.7A

Fig.7B

Fallback:  0

2

# Fig.8

EVCP

EVCP

5''''

EVCP

P4

P5

P6

P7

B

P3

A

P1

P2

# Fig.9A

Fig.9B

Fig.10

400

Flash-Memory

401

SSD-Drive

402

Harddrive

403

SD-Card

404

Memory Stick

405

Optical
Storage Medium

406

Magnetic
Storage Medium

Fig.11

**EUROPEAN SEARCH REPORT**

Application Number

**EP 24 22 1742**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/105093 A1 (ECLEVER ENTW OHG [DE]) 15 June 2023 (2023-06-15) * page 14, line 3 - line 22 * ----- | 1-18 | INV. G01C21/34 B60L53/67 B60L53/68 B60L58/12 B60L50/60 G01C21/36 |
| A | CN 119 104 079 A (CHONGQING SAILISI FENGHUANG ZHICHUANG TECHNOLOGY CO LTD) 10 December 2024 (2024-12-10) * paragraph [0093] - paragraph [0095] * ----- | 1-18 | |
| A | DE 10 2022 002972 A1 (MERCEDES BENZ GROUP AG [DE]) 28 September 2023 (2023-09-28) * paragraph [0048] * * paragraph [0050] * * paragraph [0054] * ----- | 1-18 | |

TECHNICAL FIELDS SEARCHED (IPC)

B60L

The present search report has been drawn up for all claims

| Place of search | Date of completion of the search | Examiner |
|---|---|---|
| The Hague | 23 June 2025 | Wansing, Ansgar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1742

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | | Publication date |
|---|---|---|---|---|
| WO 2023105093 A1 | 15-06-2023 | EP | 4444573 A1 | 16-10-2024 |
| | | LU | 500992 B1 | 12-06-2023 |
| | | US | 2025065768 A1 | 27-02-2025 |
| | | WO | 2023105093 A1 | 15-06-2023 |
| CN 119104079 A | 10-12-2024 | NONE | | |
| DE 102022002972 A1 | 28-09-2023 | NONE | | |

EPO FORM P0459

For more details about this annex : see Official Journal of the European Patent Office, No. 12/82